(19) Europäisches Patentamt
European Patent Office
Office européen des brevets

(11) EP 2 749 404 B1

(12) **EUROPEAN PATENT SPECIFICATION**

(45) Date of publication and mention of the grant of the patent:
**21.09.2016 Bulletin 2016/38**

(21) Application number: **12853795.8**

(22) Date of filing: **05.10.2012**

(51) Int Cl.:
***B29D 30/52*** *(2006.01)* ***B29C 33/02*** *(2006.01)*
***B60C 1/00*** *(2006.01)* ***B60C 11/04*** *(2006.01)*

(86) International application number:
**PCT/JP2012/075953**

(87) International publication number:
**WO 2013/080664 (06.06.2013 Gazette 2013/23)**

(54) **PNEUMATIC TIRE AND METHOD FOR MANUFACTURING SAME**

LUFTREIFEN UND HERSTELLUNGSVERFAHREN DAFÜR

BANDAGE PNEUMATIQUE ET PROCÉDÉ DE FABRICATION DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2011 JP 2011260612**
**12.04.2012 JP 2012091194**
**24.09.2012 JP 2012209676**

(43) Date of publication of application:
**02.07.2014 Bulletin 2014/27**

(73) Proprietor: **Sumitomo Rubber Industries, Ltd.**
**Kobe-shi, Hyogo 651-0072 (JP)**

(72) Inventor: **MIYAZAKI, Tatsuya**
**Kobe-shi**
**Hyogo 651-0072 (JP)**

(74) Representative: **Manitz, Finsterwald & Partner GbR**
**Martin-Greif-Strasse 1**
**80336 München (DE)**

(56) References cited:
**JP-A- 2005 246 864**
**JP-A- 2006 137 067**
**JP-A- 2010 264 920**
**JP-A- 2011 116 847**
**US-A1- 2011 086 943**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 749 404 B1

## Description

TECHNICAL FIELD

The present invention relates to a production method of a pneumatic tire and a pneumatic tire produced by the production method.

BACKGROUND ART

There has been known that by replacing carbon black, which is compounded as a filler into a rubber composition for a tread of a pneumatic tire, with silica, following property toward concavity and convexity of a road surface at a small deformation is enhanced and wet performance of a tire is improved. For a rubber component which is compounded into the rubber composition for a tread, a diene rubber such as a styrene-butadiene rubber, a butadiene rubber and a natural rubber is preferably used since it can provide a suitable glass-transition temperature (Tg), considering frictional force on the road, abrasion resistance and the intended use of a tire (such as temperature of usage environment and working load).

However, in the case where a great amount of silica is compounded into the rubber composition for a tread, especially in the case where the compounded amount of silica is more than that of carbon black, an initial tensile deformation due to inflation (inflation deformation) in the bottom of a shoulder groove of the tread becomes large, i.e. the amount of a cut opening in a cut opening test is increased, even if a dispersibility improving agent of silica, a silane coupling agent, a softener such as process oil/resin, a low molecular weight butadiene rubber, a low molecular weight styrene-butadiene rubber and the like are compounded.

This is because by increasing the amount of silica that is compounded into the rubber composition, the amount of the silica which has not been able to couple to the silane coupling agent is increased in the rubber composition after kneading. That is, the silica which has not been able to couple to the silane coupling agent reaggregates, and thereby a shrink of the unvulcanized tread is caused. Further, even after this unvulcanized tread is vulcanized in a vulcanization mold, a large shrink is caused in connection with cooling, when compared with the rubber composition in which only carbon black is compounded as a filler. This shrink in connection with cooling after vulcanization is a cause of an inflation deformation in the bottom of the shoulder groove. In addition, the shrink is increased due to the compounding of silica since a space existing among silane coupling agent, unreacted silica and a rubber component, or volatile gas existing in the rubber component before vulcanization disappears after vulcanization and cooling.

If the inflation deformation becomes large, the growth of the initial cut generated by stimulus of ozone, light and the like in the bottom part of the shoulder groove is promoted and results in a generation of a tread groove crack (TGC) after repeated deformation in use. The generated TGC may reach the base tread and/or a breaker layer inside the tread due to repeating deformation in use and may cause a separation, air leakage and a burst of the tire.

In order to prevent the inflation deformation, there has been known to design the form of the tire such that the shoulder groove is narrowed by the inflation, i.e. such that a tread shoulder portion is not pulled to the side of a side wall by the expansion of the tire due to the inflation, but protrudes towards the road-contact direction when compared to the crown portion.

However, in the tire in which the shoulder groove is narrowed by inflation, the pressure of the road-contact area of the shoulder portion becomes larger than that of the crown portion due to the protrusion of the shoulder portion towards the road-contact direction, and thereby the tire performance is deteriorated by low high-speed durability and/or increased rubber abrasion on the crown area.

Moreover, theoretically, it is considered to improve dispersibility of silica and prevent the aggregation of silica, by compounding a silane coupling agent in the amount which covers the total surface area of silica. However, it is not easy to cover the total surface area of silica with a silane coupling agent and the problem has not been solved.

Further, though a technique of preventing the inflation deformation and the generation of the TGC by frequently applying a mold release agent on a vulcanization mold under a low temperature and longtime vulcanization to improve the slip of the rubber is known, the productivity thereof is not good and thus is impractical.

In Patent Document 1, it is described that a pneumatic tire which is excellent in appearance, weather resistance and rough road durability can be produced by compounding a specific amount of particular paraffin wax, a sulfenamide vulcanization accelerator, a guanidine vulcanization accelerator and sulfur. However, suppressing deformation in the bottom portion of the shoulder groove is not considered.

US 2011/086943 A1 relates to a rubber composition for use in tire treads comprising: 100 parts by mass of a diene rubber and 70 to 100 parts by mass of a specific silica, wherein the diene rubber comprises from 50 to 90 mass % of a terminal-modified styrene-butadiene rubber having a hydroxy group on an end of the molecule, and from 10 to 25 mass % of a butadiene rubber;.

PRIOR ART DOCUMENT

Patent Document

Patent Document 1: JP 2011-116847 A

SUMMARY OF THE INVENTION

PROBLEM TO BE SOLVED BY THE INVENTION

An object of the present invention is to provide a production method of a pneumatic tire where productivity and tire performance are maintained while a generation of a TGC is prevented, and a pneumatic tire produced by this production method.

MEANS TO SOLVE THE PROBLEM

The present invention relates to a production method of a pneumatic tire which has a tread composed of a rubber composition for a tread comprising 40 to 120 parts by mass of silica which has a BET specific surface area of 70 to 250 $m^2/g$, and 2.5 to 6 parts by mass of at least one selected from the group consisting of stearic acid and a mold release agent comprising at least one selected from the group consisting of a metal salt of fatty acid, a fatty acid amide and an amide ester, based on 100 parts by mass of the rubber component, the method comprising:

(A) a step of molding an unvulcanized rubber composition for a tread to obtain a tread shape unvulcanized rubber composition provided with a concave profile,
(B) a step of laminating the tread shape unvulcanized rubber composition obtained in the step (A) with other unvulcanized rubber compositions for tire member to obtain an unvulcanized tire, and
(C) a step of vulcanizing the unvulcanized tire obtained in the step (B) in a vulcanization mold,

wherein the concave profile provided in the tread shape unvulcanized rubber composition is placed at a position where a convexity for the shoulder main groove provided in the inner surface of the vulcanization mold is pressed in the step (C), a sectional area of the concave profile perpendicular to the circumferential direction of the tire is 30 to 100% of the sectional area of the convexity for the shoulder main groove, when assuming that the distance from the center of the crown of the tread to the shoulder edge is 1, the center of the convexity for the shoulder main groove is provided at a position of 1/2 to 7/8 from the center of the crown, and a sectional area of the convexity for the shoulder main groove perpendicular to the circumferential direction of the tire is not less than 5% of the total sectional area of the grooves.
It is preferable that vulcanization in the step (C) comprises an inside heating c1 of heating the unvulcanized tire from the inner cavity side by filling a heating medium of 180 to 210°C for 20 seconds to 5 minutes into the inner cavity of the unvulcanized tire, and an outside heating c2 of heating the unvulcanized tire from the outer surface thereof by heating the vulcanization mold to 160 to 175°C.
It is preferable that the rubber composition for a tread further comprises 0.5 to 2.5 parts by mass of zinc oxide and the content of at least one selected from the group consisting of stearic acid and a mold release agent comprising at least one selected from the group consisting of a metal salt of fatty acid, a fatty acid amide and an amide ester is 3.5 to 6 parts by mass, based on 100 parts by mass of the rubber component.
It is preferable that the rubber composition for a tread does not comprise diphenylguanidine but comprises 0.1 to 4 parts by mass of a compound represented by the following formula (1) and/or a compound represented by the following formula (2), based on 100 parts by mass of the rubber component.

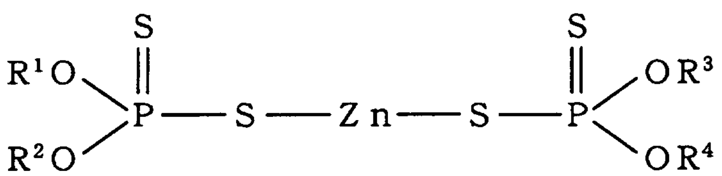

(1)

In the formula (1), each of $R^1$ to $R^4$ is independently a linear or branched alkyl group having 1 to 18 carbon atoms, or a cycloalkyl group having 5 to 12 carbon atoms.

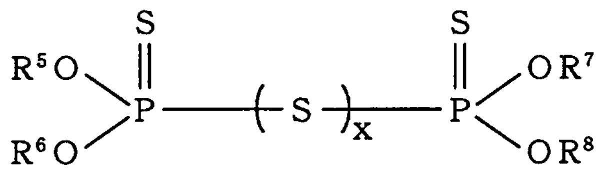

(2)

In the formula (2), x is an integer of 1 or more, and each of $R^5$ to $R^8$ is independently a linear or branched alkyl group having 1 to 18 carbon atoms, or a cycloalkyl group having 5 to 12 carbon atoms.

The present invention also relates to a pneumatic tire produced by the above production method.

EFFECTS OF THE INVENTION

According to the present invention, a production method of a pneumatic tire where a deformation in the bottom of the shoulder main groove of the tread is decreased, an initial tensile deformation due to inflation is prevented and as a result, a generation of a TGC is prevented while maintaining productivity and tire performance can be provided, by using a rubber composition for a tread comprising 40 to 120 parts by mass of silica which has a BET specific surface area of 70 to 250 $m^2/g$, and 2.5 to 6 parts by mass of at least one selected from the group consisting of stearic acid and a specific mold release agent, based on 100 parts by mass of the rubber component, and providing, in the molding step (step A) of the unvulcanized rubber composition for a tread, a concave profile in a predetermined size at a position where the convexity for the shoulder main groove of the vulcanization mold is pressed. According to the present invention, a pneumatic tire produced by the production method can be further provided.

BRIEF DESCRIPTION OF THE DRAWINGS

FIG. 1 is a schematic partial cross-sectional view of a vulcanization mold and an unvulcanized tire according to one embodiment of the present invention.

FIGs. 2A to 2C are a schematic view of an example of a concave profile of the present invention.

FIGs. 3A to 3C are a schematic cross-sectional view of a convexity for a shoulder main groove provided in the inner surface of a vulcanization mold.

FIGs. 4A to 4C are a schematic view of an example of shape of a convexity for a shoulder main groove provided in the inner surface of a vulcanization mold.

FIG. 5 is a schematic partial cross-sectional view of a tire, a vulcanization mold and a vulcanization bladder in the vulcanization step.

EMBODIMENT FOR CARRYING OUT THE INVENTION

The production method of a pneumatic tire of the present invention is a production method of a pneumatic tire which has a tread composed of a rubber composition for a tread comprising 40 to 120 parts by mass of silica which has a BET specific surface area of 70 to 250 $m^2/g$, and 2.5 to 6 parts by mass of at least one selected from the group consisting of stearic acid and a specific mold release agent, based on 100 parts by mass of the rubber component, the method comprising:

(A) a step of molding an unvulcanized rubber composition for a tread to obtain a tread shape unvulcanized rubber composition provided with a concave profile,

(B) a step of laminating the tread shape unvulcanized rubber composition obtained in the step (A) with other unvulcanized rubber compositions for tire member to obtain an unvulcanized tire, and

(C) a step of vulcanizing the unvulcanized tire obtained in the step (B) in a vulcanization mold,

wherein the concave profile provided in the tread shape unvulcanized rubber composition is placed at a position where a convexity for the shoulder main groove provided in the inner surface of the vulcanization mold is pressed in the step (C), a sectional area of the concave profile perpendicular to the circumferential direction of the tire is 30 to 100% of the sectional area of the convexity for the shoulder main groove, when assuming that the distance from the center of the crown of the tread to the shoulder edge is 1, the center of the convexity for the shoulder main groove is provided at a position of 1/2 to 7/8 from the center of the crown, and a sectional area of the convexity for the shoulder main groove perpendicular to the circumferential direction of the tire is not less than 5% of the total sectional area of the grooves.

A tread of a pneumatic tire produced by the production method of the present invention is composed of a rubber composition for a tread comprising 40 to 120 parts by mass of silica which has a BET specific surface area of 70 to 250 $m^2/g$, and 2.5 to 6 parts by mass of at least one selected from the group consisting of stearic acid and a specific mold release agent, based on 100 parts by mass of the rubber component.

Examples of the rubber component include diene rubbers such as a natural rubber (NR), an isoprene rubber (IR), a butadiene rubber (BR), a styrene-butadiene rubber (SBR), a styrene-isoprene rubber (SIR), a styrene-isoprene-butadiene rubber (SIBR), an ethylene-propylene-diene rubber (EPDM), a chloroprene rubber (CR), an acrylonitrile-butadiene rubber (NBR) and a butyl rubber (IIR). These diene rubbers may be used alone, or may be used in combination with two or more thereof. Among them, it is preferable to use the NR, BR and/or SBR since grip performance and abrasion resistance can be obtained in a favorable balance, and it is more preferable to use the SBR since more excellent grip performance can be obtained.

The SBR is not limited especially and for example, an emulsion polymerized styrene-butadiene rubber (E-SBR) and a solution polymerized styrene-butadiene rubber (S-SBR) and the like can be used. In addition, a terminal-modified S-SBR (modified S-SBR) or E-SBR (modified E-SBR) can be also used and examples of the modified S-SBR and the modified E-SBR include one modified with an organic silicon compound comprising an alkoxy group such as an alkoxy group having an amino group or one modified with an amino group only.

The content of styrene in the SBR is preferably not less than 20% by mass, more preferably not less than 25% by mass. If the content of styrene in the SBR is less than 20% by mass, there is a tendency that sufficient grip performance cannot be obtained. On the other hand, the content of styrene in the SBR is preferably not more than 60% by mass, more preferably not more than 50% by mass. If the content of styrene in the SBR is more than 60% by mass, there is a tendency that abrasion resistance is degraded, and additionally, the temperature dependence is increased and thus a performance change with respect to a temperature change is increased.

In the case where the rubber composition comprises the SBR as a diene rubber component, the content of the SBR is preferably not less than 20% by mass, more preferably not less than 30% by mass. If the content of the SBR is less than 20% by mass, there is a tendency that sufficient heat resistance and grip performance cannot be obtained. On the other hand, the content of the SBR is preferably not more than 90% by mass, more preferably not more than 80% by mass. If the content of the SBR is more than 90% by mass, heat build-up property and crack growth resistance tend to be deteriorated.

The examples of the BR include a high cis-1,4-polybutadiene rubber (high-cis BR), a butadiene rubber comprising 1,2-syndiotactic polybutadiene crystals (SPB-containing BR), a modified butadiene rubber (modified BR), a rare-earth-metal-catalyzed BR and the like, and these may be used alone, or may be used in combination with two or more thereof.

The high-cis BR is a butadiene rubber in which the content of cis-1,4 bond is not less than 90% by mass.

It is preferable that the SPB-containing BR is not the one in which 1,2-syndiotactic polybutadiene crystals (SPB) are simply dispersed in the BR, but the one in which 1,2-syndiotactic polybutadiene crystals (SPB) are chemically bonded with the BR and dispersed, since it is more excellent in crack growth resistance.

The melting point of 1,2-syndiotactic polybutadiene crystals is preferably not less than 180°C, more preferably not less than 190°C. When the melting point of 1,2-syndiotactic polybutadiene crystals is less than 180°C, there is a tendency that the crystals are melted during vulcanization of a tire and the hardness of the rubber composition is decreased. On the other hand, the melting point of 1,2-syndiotactic polybutadiene crystals is preferably not more than 220°C, more preferably not more than 210°C. When the melting point of 1,2-syndiotactic polybutadiene crystals is more than 220°C, there is a tendency that the dispersibility in the rubber composition is deteriorated due to the increase of the molecular weight of the BR and extrusion processability is deteriorated.

The content of a boiling n-hexane insoluble matter in the SPB-containing BR is preferably not less than 2.5% by mass, more preferably not less than 8% by mass. When the content is less than 2.5% by mass, the hardness of the rubber composition tends to be insufficient. On the other hand, the content of the boiling n-hexane insoluble matter is preferably not more than 22% by mass, more preferably not more than 20% by mass, further preferably not more than 18% by mass. When the content exceeds 22% by mass, the viscosity of the BR itself becomes high and there is a tendency that the dispersibility of the BR and a filler in the rubber composition deteriorates. Here, the boiling n-hexane insoluble matter indicates 1,2-syndiotactic polybutadiene in the SPB-containing BR.

The content of the 1,2-syndiotactic polybutadiene crystals in the SPB-containing BR is preferably not less than 2.5% by mass, more preferably not less than 10% by mass. When the content is less than 2.5% by mass, the hardness of the rubber tends to be insufficient. On the other hand, the content of the 1,2-syndiotactic polybutadiene crystals in the BR is preferably not more than 20% by mass, more preferably not more than 18% by mass. When the content exceeds 20% by mass, the BR becomes difficult to disperse in the rubber composition and the processability tends to deteriorate.

Examples of the modified BR include a terminal-modified BR coupled with tin and a terminal-modified BR having an alkoxysilyl group and/or an amino group. Among them, the modified BR obtained by performing polymerization of

1,3-butadiene with a lithium initiator and then adding a tin compound, and further having the terminal molecules bonded with a tin-carbon bond is preferable.

Examples of the lithium initiator include lithium compounds such as alkyllithium, aryllithium, vinyllithium, organotin lithium compounds and organonitrogen lithium compounds, lithium metal and the like. By using the lithium initiator as the initiator for a modified BR, a modified BR having a high vinyl content and a low cis content can be produced.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, p-tributyltin styrene and the like, and these tin compounds may be used alone, or may be used in combination with two or more thereof.

The content of tin atoms in the modified BR is preferably not less than 50 ppm, more preferably not less than 60 ppm. When the content of tin atoms is less than 50 ppm, the effect of accelerating the dispersion of carbon black in the modified BR tends to be small and additionally, the tan$\delta$ tends to increase. On the other hand, the content of tin atoms is preferably not more than 3,000 ppm, more preferably not more than 2,500 ppm, further preferably not more than 250 ppm. When the content of tin atoms exceeds 3,000 ppm, cohesiveness of the kneaded product tends to be poor, the edges thereof tend not to be aligned, and therefore extrusion processability of the kneaded product tends to deteriorate.

The molecular weight distribution (Mw/Mn) of the modified BR is preferably not more than 2.0, more preferably not more than 1.5. When the Mw/Mn of the modified BR exceeds 2.0, the dispersibility of carbon black tends to deteriorate and the tan$\delta$ tends to increase. It is noted that the Mw and Mn in the present invention is a value calculated with polystyrene standards using a gel permeation chromatograph (GPC).

The vinyl bond amount of the modified BR is preferably not less than 5% by mass, more preferably not less than 7% by mass. When the vinyl bond amount of the modified BR is less than 5% by mass, it tends to be difficult to polymerize (produce) a modified BR. On the other hand, the vinyl bond amount of the modified BR is preferably not more than 50% by mass, more preferably not more than 20% by mass. When the vinyl bond amount of the modified BR exceeds 50% by mass, there is a tendency that heat build-up property is increased and rolling resistance is deteriorated.

The rare-earth-metal-catalyzed BR is a butadiene rubber synthesized with a rare earth element containing catalyst, and is characterized by a high cis content and a low vinyl content. Ones generally used in the production of tires may be used as the rare-earth-metal-catalyzed BR.

Well-known ones may be used as the rare earth element containing catalyst used for the synthesis of the rare-earth-metal-catalyzed BR, and examples thereof include catalysts which comprise a lanthanoids-containing compound, an organoaluminum compound, an aluminoxane, or a halogen-containing compound, and optionally comprise a Lewis base. Among them, Nd-containing catalysts using a neodymium (Nd)-containing compound as a lanthanoids-containing compound are particularly preferable.

Examples of the lanthanoids-containing compound include halides, carboxylates, alcoholates, thioalcoholates and amides of rare earth metals which have atomic numbers 57 through 71. Among them, the Nd-containing catalysts are preferable since a BR having a high cis content and a low vinyl content can be obtained.

As the organoaluminum compound, compounds represented by $AlR^aR^bR^c$ (wherein $R^a$, $R^b$ and $R^c$ are the same or different, and each represents hydrogen or a hydrocarbon group having 1 to 8 carbon atoms) may be used. Examples of the aluminoxane include chain aluminoxanes and cyclic aluminoxanes. Examples of the halogen-containing compound include aluminum halides represented by $AlX_kR^d_{3-k}$ (wherein X represents halogen, $R^d$ represents an alkyl, aryl, or aralkyl group having 1 to 20 carbon atoms, and k represents 1, 1.5, 2 or 3), strontium halides such as $Me_3SrCl$, $Me_2SrCl_2$, MeSrHCl2 and MeSrCl3, and metal halides such as silicon tetrachloride, tin tetrachloride and titanium tetrachloride. The Lewis base may be used for complexing a lanthanoids-containing compound, and suitable examples thereof include acetylacetone, ketone, alcohol and the like.

In the polymerization of butadiene, the rare earth element containing catalysts may be used while being dissolved in an organic solvent (such as n-hexane, cyclohexane, n-heptane, toluene, xylene, or benzene), or while being carried on an appropriate carrier such as silica, magnesia, or magnesium chloride. The polymerization condition may be either of solution polymerization or bulk polymerization. The polymerization temperature is preferably -30 to 150°C and the polymerization pressure may be optionally set depending on other conditions.

The rare-earth-metal-catalyzed BR has a Mooney viscosity $ML_{1+4}$ (100°C) of preferably not less than 35, more preferably not less than 40. A Mooney viscosity of less than 35 tends to cause a low viscosity of the unvulcanized rubber composition and a proper thickness after vulcanization tends not to be ensured. Further, the Mooney viscosity is preferably not more than 55, more preferably not more than 50. When the Mooney viscosity exceeds 55, the unvulcanized rubber composition tends to become so hard that it is difficult to be extruded with smooth edges. It is noted that the Mooney viscosity is measured in accordance with ISO289 or JIS K6300.

The ratio of the weight-average molecular weight (Mw) to the number-average molecular weight (Mn) (Mw/Mn) of the rare-earth-metal-catalyzed BR is preferably not less than 1.2, more preferably not less than 1.5. When the Mw/Mn is less than 1.2, processability tends to be significantly deteriorated. Further, the Mw/Mn is preferably not more than 5,

more preferably not more than 4. When the Mw/Mn exceeds 5, heat build-up property tends to deteriorate.

The Mw of the rare-earth-metal-catalyzed BR is preferably not less than 300,000, more preferably not less than 320,000. On the other hand, the Mw is preferably not more than 1,500,000, more preferably not more than 1,300,000. Moreover, the Mn of the rare-earth-metal-catalyzed BR is preferably not less than 100,000, more preferably not less than 150,000. On the other hand, the Mn is preferably not more than 1,000,000, more preferably not more than 800,000. If the Mw or Mn is less than its preferable lower limit, heat build-up property and elongation at break tend to deteriorate. On the other hand, if the Mw or Mn is more than its preferable upper limit, deterioration of processability becomes a concern. In the present invention, the Mw and Mn can be calculated with polystyrene standards using a gel permeation chromatograph (GPC).

The content of cis-1,4 bond of the rare-earth-metal-catalyzed BR is preferably not less than 90% by mass, more preferably not less than 93% by mass, further preferably not less than 95% by mass. If the content is less than 90% by mass, elongation at break and abrasion resistance tend to deteriorate.

The vinyl content of the rare-earth-metal-catalyzed BR is preferably not more than 1.8% by mass, more preferably not more than 1.0% by mass, further preferably not more than 0.5% by mass, yet further preferably not more than 0.3% by mass. If the content exceeds 1.8% by mass, elongation at break and abrasion resistance tend to deteriorate. It is noted that in the present invention, the vinyl content (1,2-bond butadiene unit quantity) and the cis-1,4 bond content of the high-cis BR, modified BR and rare-earth-metal-catalyzed BR can be measured by infrared absorption spectrum analysis.

Among these various BRs, it is preferable to use rare-earth-metal-catalyzed BR due to its excellent abrasion resistance and heat build-up property. Among rare-earth-metal-catalyzed BR, it is preferable to use BR synthesized with an Nd-containing catalyst in view of more excellent abrasion resistance and heat build-up property.

When the rubber composition comprises the BR as a diene rubber component, the content thereof is preferably not less than 10% by mass, more preferably not less than 15% by mass. If the content of the BR is less than 10% by mass, abrasion resistance and crack growth resistance tend to be insufficient. On the other hand, the content of the BR is preferably not more than 80% by mass, more preferably not more than 70% by mass, further preferably not more than 60% by mass. If the content of the BR exceeds 80% by mass, grip performance tends to be insufficient. Additionally, when two or more kinds of BRs are used together, the total amount of combined BRs is regarded as the content of BR.

The NR is not limited particularly and ones generally used in the production of tires can be used, and examples thereof include SIR20, RSS#3, TSR20 and the like.

When the rubber composition comprises the NR as a diene rubber component, the content thereof is preferably not less than 10% by mass, more preferably not less than 15% by mass. If the content of the NR is less than 10% by mass, elongation at break and breaking resistance tend to be insufficient. On the other hand, the content of the NR is preferably not more than 60% by mass, more preferably not more than 50% by mass, further preferably not more than 40% by mass. If the content of the NR exceeds 60% by mass, crack growth resistance and reversion resistance tend to be insufficient.

The rubber composition for a tread comprises silica. By increasing the amount of silica, the wet performance can be improved. However, the rubber composition shrinks at cooling after vulcanization, and thereby a TGC tends to be caused. On the other hand, in the production method of a pneumatic tire of the present invention, even if a pneumatic tire has a tread composed of a rubber composition for a tread comprising silica, a pneumatic tire in which a generation of TGC is prevented while maintaining productivity and tire performance can be produced by using a rubber composition for a tread comprising at least one selected from the group consisting of: stearic acid and a specific mold release agent, and providing, in the molding step (step A) of the unvulcanized rubber composition for a tread, a concave profile at a position where the convexity for the shoulder main groove of the vulcanization mold is pressed.

Examples of silica include silica prepared by dry process (silicic anhydride) and silica prepared by wet process (hydrous silicic acid). The silica prepared by wet process is preferable because it has more silanol groups on its surface and has many reaction points with a silane coupling agent.

The BET specific surface area of silica is 70 to 250 $m^2/g$, preferably 80 to 240 $m^2/g$, more preferably 90 to 230 $m^2/g$. If the BET specific surface area is less than 70 $m^2/g$, abrasion resistance tends to be insufficient. On the other hand, if the BET specific surface area exceeds 250 $m^2/g$, there is a tendency that processability is deteriorated and a shrink at cooling after vulcanization becomes extremely large.

The content of silica based on 100 parts by mass of the rubber component is not less than 40 parts by mass and preferably not less than 50 parts by mass. If the content of the silica is less than 40 parts by mass, the effect of improving wet performance, which is obtained by the use of silica, tends to be insufficient. On the other hand, the content of the silica is not more than 120 parts by mass, preferably not more than 110 parts by mass, further preferably not more than 105 parts by mass. If the content of the silica exceeds 120 parts by mass, there is a tendency that processability is deteriorated and a shrink at cooling after vulcanization becomes extremely large.

The rubber composition for a tread comprises at least one selected from the group consisting of stearic acid and a specific mold release agent. By using the rubber composition for a tread comprising at least one selected from

the group consisting of stearic acid and a specific mold release agent, slipping property of the rubber composition for a tread pressed by a convexity provided in the inner surface of a vulcanization mold (slip of the rubber) in a vulcanization step (step C) described below can be improved. By improving this slipping property, a deformation of the rubber at the bottom of the groove formed in the tread and an inflation deformation can be prevented and thereby the generation of a TGC can be prevented.

The stearic acid is not limited particularly and ones generally used in the production of tires can be used. The rubber composition comprising the stearic acid is preferable since the working viscosity can be reduced and the suitable vulcanization speed can be ensured. Moreover, it is preferable since zinc stearate bonded with zinc oxide described below is bloomed on the surface of rubber and high slipping property and high dispersibility of the zinc oxide can be obtained, and additionally, by using together with the mold release agent, high slipping property toward the vulcanization mold can be obtained.

Ones generally used in the production of tires can be used as the metal salt of saturated fatty acid. Examples thereof include zinc stearate, a mixture of zinc soaps of saturated fatty acids having various number of carbon atoms and the like.

The zinc stearate is not limited particularly and ones generally used in the production of tires can be used. The use of the zinc stearate is preferable since there is a case where zinc stearate is used in a tire molding machine as an adhesion preventing agent and thus when the rubber composition comprises zinc stearate, it is bloomed on the surface of rubber and can improve slipping property.

Examples of the mixture of zinc soaps of saturated fatty acids having various number of carbon atoms include Aktiplast PP (mainly composed of zinc soaps of saturated fatty acid having 17 carbon atoms) produced by Rhein Chemie Corporation and the like. It is preferable to prepare the rubber composition comprising such mixture, since slipping property can be improved without deteriorating tread tackiness to casing.

The specific mold release agent is a mold release agent comprising at least one selected from the group consisting of a metal salt of fatty acid, a fatty acid amide and an amide ester. Examples of a metal in the metal salt of fatty acid include calcium, zinc, potassium, sodium and the like. Among them, a fatty acid calcium salt is preferable since it is not expensive, does not cause environmental pollution and does not affect the vulcanization speed.

Examples of the specific mold release agent include WB16 produced by Struktol Co., Ltd. which is a mixture of a fatty acid calcium salt and a fatty acid amide, Aflux16 produced by Rhein Chemie Corporation which is a mixture of a fatty acid calcium salt and an amide ester, Aflux37 produced by Rhein Chemie Corporation which comprises an amide ester and the like.

The total content of at least one selected from the group consisting of stearic acid and a specific mold release agent based on 100 parts by mass of the rubber component is not less than 2.5 parts by mass, preferably not less than 3.5 parts by mass, more preferably not less than 4.0 parts by mass. If the total content is less than 2.5 parts by mass, slipping property of the rubber composition in the vulcanization step tends to be insufficient and processability tends to deteriorate. On the other hand, the total content is not more than 6.0 parts by mass, preferably not more than 5.5 parts by mass. If the total content exceeds 6.0 parts by mass, tread tackiness to casing tends to deteriorate and processability deteriorate (due to too low viscosity) and molding into the tread shape tends to become difficult.

In the case where the rubber composition comprises the stearic acid, the content thereof based on 100 parts by mass of the rubber component is preferably not less than 2.2 parts by mass, more preferably not less than 2.5 parts by mass. If the content of the stearic acid is less than 2.2 parts by mass, processability and abrasion resistance tend to deteriorate. On the other hand, the content of the stearic acid is preferably not more than 4.0 parts by mass, more preferably not more than 3.5 parts by mass. If the content of stearic acid exceeds 4.0 parts by mass, tread tackiness to casing tends to deteriorate.

In the case where the rubber composition comprises zinc stearate as the metal salt of saturated fatty acid, the content thereof based on 100 parts by mass of the rubber component is preferably not less than 0.5 part by mass, more preferably not less than 1.0 part by mass. If the content of the zinc stearate is less than 0.5 part by mass, slipping property of the rubber composition at vulcanization step tends not to be improved enough. On the other hand, the content of the zinc stearate is preferably not more than 2.0 parts by mass, more preferably not more than 1.5 parts by mass. If the content of the zinc stearate exceeds 2.0 parts by mass, blooming on the raw rubber surface becomes excess and there is a tendency that tread tackiness to casing and abrasion resistance deteriorate.

In the case where the rubber composition comprises the mixture of zinc soaps of saturated fatty acids having various number of carbon atoms as the metal salt of saturated fatty acid, the content thereof based on 100 parts by mass of the rubber component is preferably not less than 0.5 part by mass, more preferably not less than 1.0 part by mass. If the content of the mixture is less than 0.5 part by mass, there is a tendency that slipping property with a mold becomes insufficient and the amount of a cut opening increases. On the other hand, the content of the mixture is preferably not more than 2.0 parts by mass, more preferably not more than 1.5 parts by mass. If the content of the mixture exceeds 2.0 parts by mass, there is a tendency that tread tackiness to casing deteriorates and a blown rubber (a rubber composition in which an interface adhesion thereof is peeled in a blister form) is easily generated.

In the case where the rubber composition comprises the specific mold release agent, the content thereof based on 100 parts by mass of the rubber component is preferably not less than 0.1 part by mass, more preferably not less than 0.5 part by mass. If the content is less than 0.1 part by mass, slipping property of the rubber composition at vulcanization step tends not to be improved enough. On the other hand, the content is preferably not more than 4.0 parts by mass, more preferably not more than 3.5 parts by mass. If the content exceeds 4.0 parts by mass, tread tackiness to casing tends to be deteriorated.

It is preferable that the rubber composition for a tread comprises zinc oxide. By using the rubber composition for a tread comprising zinc oxide, processability and reversion resistance can be improved. Further, by using together with the above stearic acid, a reaction is caused by heating in the vulcanization step to generate zinc stearate, and this zinc stearate can further improve slipping property of the rubber composition for a tread.

In the case where the rubber composition comprises zinc oxide, the content thereof based on 100 parts by mass of the rubber component is preferably not less than 0.5 part by mass, more preferably not less than 1.0 part by mass. If the content of zinc oxide is less than 0.5 part by mass, processability tends to deteriorate (due to high viscosity). On the other hand, the content of zinc oxide is preferably not more than 2.5 parts by mass, more preferably not more than 2.0 parts by mass. If the content of zinc oxide exceeds 2.5 parts by mass, abrasion resistance tends to deteriorate.

It is preferable that the rubber composition for a tread comprises a silane coupling agent. Any silane coupling agents conventionally used can be used, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, 2-mercaptoethyltriethoxysilane, and 8-mercaptooctanoyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; chloro silane coupling agents such as 3-chloropropyltrimethoxysilane, 3-chloropropyltriethoxysilane, 2-chloroethyltrimethoxysilane, and 2-chloroethyltriethoxysilane; and the like. These silane coupling agents may be used alone, or may be used in combination with two or more thereof. Among them, bis(3-triethoxysilylpropyl)tetrasulfide and/or bis(3-triethoxysilylpropyl)disulfide are preferable in view of their good processability. Further, sulfide silane coupling agents and/or mercapto silane coupling agents are preferable in view of their strong binding force with silica and excellent heat build-up property. In addition, mercapto silane coupling agents are more preferable since they can suitably improve fuel efficiency and abrasion resistance. Examples of mercapto silane coupling agents include NXT-Z100, NXT-Z45 and NXT produced by Momentive Performance Materials INC.

In the case where the rubber composition comprises a silane coupling agent, the content thereof based on 100 parts by mass of silica is preferably not less than 4.0 parts by mass, more preferably not less than 6.0 parts by mass. If the content of the silane coupling agent is less than 4.0 parts by mass, the effect of improving dispersibility and the like tends not to be obtained enough. On the other hand, the content of the silane coupling agent is preferably not more than 12 parts by mass, more preferably not more than 10 parts by mass. If the content of the silane coupling agent exceeds 12 parts by mass, there is a tendency that the sufficient coupling effect and the sufficient effect of dispersing silica are not obtained and reinforcing property is deteriorated.

It is preferable that the rubber composition for a tread comprises carbon black since reinforcing property, resistance to ultraviolet deterioration and crack resistance of the rubber composition can be improved.

Examples of carbon black include ones generally used in the production of tires such as SAF, ISAF, HAF, FF, FEF and GPF, and these carbon black may be used alone, or may be used in combination with two or more thereof.

In the case where the rubber composition comprises carbon black, the content thereof based on 100 parts by mass of the rubber component is preferably not less than 5 parts by mass, more preferably not less than 10 parts by mass, further preferably not less than 20 parts by mass. If the content of carbon black is less than 5 parts by mass, resistance to ultraviolet deterioration and durability tend to deteriorate. On the other hand, the content of carbon black is preferably not more than 100 parts by mass, more preferably not more than 80 parts by mass, further preferably not more than 60 parts by mass. If the content of carbon black exceeds 100 parts by mass, there is a tendency that heat build-up is excessively increased and thus rolling resistance is deteriorated.

In addition to the above components, the rubber composition for a tread may also appropriately comprise compounding agents conventionally used in the tire industry and the examples thereof include another filler for reinforcement, an anti-aging agent, oil, wax, a vulcanization agent such as sulfur, a vulcanization accelerator, a crosslinking aid and the like.

Here, it is generally known that the reaction between silica and a silane coupling agent during kneading or vulcanization can be promoted by using diphenylguanidine (DPG) as a crosslinking aid. However, the DPG is thermally decomposed during vulcanization and generates highly-volatile aniline. The volatilization of this aniline from the rubber composition after vulcanization becomes one reason of a shrink of the rubber composition. Therefore, in the present invention, it is preferable that the rubber composition for a tread does not comprise DPG which generates highly volatile substance such as aniline, but comprises a compound represented by the following formula (1) and/or a compound represented by the following formula (2).

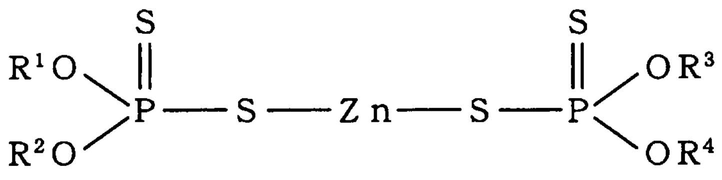

(1)

In the general formula (1), each of $R^1$ to $R^4$ is independently a linear or branched alkyl group having 1 to 18 carbon atoms, or a cycloalkyl group having 5 to 12 carbon atoms.

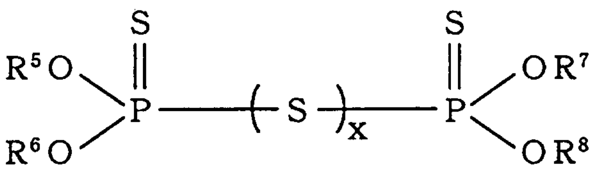

(2)

In the general formula (2), x is an integer of 1 or more, and each of $R^5$ to $R^8$ is independently a linear or branched alkyl group having 1 to 18 carbon atoms, or a cycloalkyl group having 5 to 12 carbon atoms.

In the case where the rubber composition comprises a compound represented by the general formula (1) and/or general formula (2), the content thereof based on 100 parts by mass of the rubber component is preferably 0.1 to 4.0 parts by mass, more preferably 0.5 to 3.0 parts by mass. If the content of the compound is less than 0.1 part by mass, the effect of accelerating vulcanization tends to be insufficient. On the other hand, if the content of the compound is more than 4.0 parts by mass, there is a tendency that the crosslinking density becomes too high and abrasion resistance deteriorates.

The production method of a pneumatic tire of the present invention uses the above rubber composition for a tread, and comprises a step (A) of molding an unvulcanized rubber composition for a tread to obtain a tread shape unvulcanized rubber composition provided with a concave profile, a step (B) of laminating the tread shape unvulcanized rubber composition obtained in the step (A) with other unvulcanized rubber compositions for tire member to obtain an unvulcanized tire, and a step (C) of vulcanizing the unvulcanized tire obtained in the step (B) in a vulcanization mold.

In the step (A), an unvulcanized rubber composition obtained by a kneading step of kneading the rubber components, silica, at least one selected from the group consisting of stearic acid and a specific mold release agent, and other compounding agents with a Banbury mixer, a kneader or an open roll, is molded by extrusion into a predetermined shape to prepare a tread shape unvulcanized rubber composition provided with a concave profile.

While the kneading step is not limited particularly as long as the effect of the invention is not impaired, it is preferable that the kneading step comprises:

a kneading step X of kneading the rubber components, a half amount of silica (50% by mass of silica to be contained), and all of carbon black when comprising carbon black, a kneading step Y of adding other components other than vulcanizing agents (sulfur, vulcanization accelerator, vulcanization acceleration auxiliary, crosslinking aid) and then kneading, and a kneading step F of further adding the vulcanization agents and then kneading, since the carbon black and
silica can be sufficiently dispersed and the rubber composition which is excellent in abrasion resistance and elongation at break can be obtained.

Among the components of the rubber composition for a tread, there are ones which may cause a reaction with

other components or decompose due to heating in the kneading step and vulcanization step to generate a substance which is comparatively highly-volatile such as water, ethanol or aniline. It is preferable not to contain components which generate these highly-volatile substances since they cause a shrink of the rubber composition, but even if they are contained, both a shrink due to cooling after molding by extrusion of the rubber composition and a shrink due to cooling after vulcanization of the rubber composition can be prevented by volatilizing the highly-volatile substances by moving a ram up and down several times in the kneading step, or suspending kneaded rubber sheets at spaces without laminating them.

Though the concave profile of the present invention will be explained referring to the attached drawings, the present invention is not limited only thereto.

As shown in FIG. 1, the concave profile P of the present invention is serially provided in the circumferential direction of the tire at the tread shoulder portion of the unvulcanized tire obtained in the step (B), and is placed at the position corresponding to the convexity for the shoulder main groove Q provided inside the vulcanization mold 20 and pressed in the step (C). By providing this concave profile P, a deformation of the rubber at the bottom of the shoulder main groove, which is generated by the tread portion of the unvulcanized tire pressed by the convexity for the shoulder main groove Q, can be prevented. That is, by providing the concave profile P, slip of a portion of the rubber of the unvulcanized rubber composition that is pressed by the convexity for the shoulder main groove Q becomes smooth, and the profile of the convexity for the shoulder main groove Q in the vulcanization mold can be formed without deforming the rubber composition. As a result, an inflation deformation and a TGC can be prevented.

An ordinal pneumatic tire has a shoulder portion in the vicinity of the both ends of the tread portion. Here, the concave profile of the present invention can be provided in at least one of the shoulder portions, but preferably provided in the both shoulder portions since a TGC can be prevented at the shoulder main grooves of the both ends.

A sectional area of the concave profile perpendicular to the circumferential direction of the tire is 30 to 100% of the sectional area of the convexity for the shoulder main groove of the vulcanization mold perpendicular to the circumferential direction of the tire, and preferably 40 to 80%. If the sectional area of the concave profile is less than 30%, the effect of improving slip of the rubber at the shoulder main groove tends to be insufficient, and additionally, undulation at the breaker layer in the lower portion of the tread or deterioration of uniformity is caused and wet performance or abrasion resistance tends to deteriorate. On the other hand, if the sectional area of the concave profile exceeds 100%, the unvulcanized rubber composition more than the volume of the convexity for the shoulder main groove is lost. Therefore a space is generated between the unvulcanized tire and the vulcanization mold at vulcanization, and there is a tendency that bareness on the surface of the tire or undulation of the breaker layer in the lower portion of the tread is generated and uniformity deteriorates. It is noted that bareness is a phenomenon in which an intervening air space between the unvulcanized rubber composition and the vulcanization mold is generated due to the insufficient adhesion therebetween, and after vulcanization, a rubber composition at this portion is dented in the half-baked state and has a gloss.

The depth of the concave profile (Pd in FIGs. 2A to 2C) with respect to the height of the convexity for the shoulder main groove (Qd in FIGs. 3A to 3C) to be pressed is preferably not less than 10%, more preferably not less than 20%. If the depth of the concave profile is less than 10%, the effect of making the slip of the rubber smooth tends to be small. On the other hand, the depth of the concave profile is preferably not more than 100%, more preferably not more than 80%. If the depth of the concave profile exceeds 100%, it tends to cause bareness.

The width of the concave profile (Pw in FIGs. 2A to 2C) with respect to the width of the convexity for the shoulder main groove to be pressed is preferably not less than 100%, more preferably not less than 120%. If the width of the concave profile is less than 100%, the convexity for the shoulder main groove in the vulcanization mold tends to be difficult to fit with the concave profile. On the other hand, the width of the concave profile is preferably not more than 200%, more preferably not more than 180%. If the width of the concave profile exceeds 200%, it tends to cause bareness. It is noted that the width of the shoulder main groove in the present invention is a width of the base portion of the convexity (Qw in FIG. 4A) when the convexity for the shoulder main groove is provided straight with a uniform width on the periphery of the tire, a width of the base portion of the convexity in its widest portion (Qw in FIG. 4B) when the convexity for the shoulder main groove does not have a uniform width and a width from the left end of the base portion of the leftmost groove to the right end of the base portion of the rightmost groove (Qw in FIG. 4C) when the convexity for the shoulder main groove is not provided straight but in a zig-zag manner and the like.

It is preferable that the position of the concave profile is provided such that the centerline of the convexity for the shoulder main groove obtained by a weighted average becomes a centerline of the concave profile. It is noted that the centerline of the convexity for the shoulder main groove obtained by a weighted average in the specification is, as shown in FIGs. 3A to 3C, a vertical line Y extending from the intersection X of the imaginary extended lines from the both groove walls to the mold surface of the vulcanization mold.

Examples of the shape of the concave profile include, as shown in FIGs. 2A to 2C, a shallow wide U-shape (FIG. 2A), V-shape (FIG. 2B), an ordinary U-shape (FIG. 2C) and the like and can be appropriately selected so as to correspond to the shape of the convexity of for the shoulder main groove of the vulcanization mold. For the shape of the convexity for the shoulder main groove, the U-shape is preferable since the shape of the tread pattern, water draining

performance and wet performance are sustained, and thus it is preferable that the concave profile has a shallow wide U-shape or ordinary U-shape so as to correspond to this U-shape. In the case where the convexity for the shoulder main groove is provided in a zig-zag manner, a shallow wide U-shape is preferable.

The convexities for the shoulder main groove Q are convexities serially provided in the circumferential direction of the tread portion inside the vulcanization mold, and are for forming shoulder main grooves in a tread shoulder portion of the tire to be vulcanized.

The convexity for the shoulder main groove Q is a convexity in which a centerline thereof obtained by a weighted average is located at a position of 1/2 to 7/8 from the center of the crown (between q1 and q2 in FIG. 1) when assuming that the distance from the center C of the tread crown portion to the shoulder edge Se in the vulcanization mold is 1, and a sectional area of this shoulder main groove perpendicular to the circumferential direction of the tire is not less than 5% of the total sectional area of the grooves provided in the entire tread. With respect to the case where the shoulder main groove is provided in both ends of the tread, the sectional area of each shoulder main groove is not less than 5% of the total sectional area of the grooves.

Examples of a method of molding the tread shape unvulcanized rubber composition having the concave profile include a method of extruding and molding an unvulcanized rubber composition with an extruder into a tread shape having the concave profile, or strip winding molding in which the unvulcanized rubber composition is formed into a rubber strip in a long belt-like shape (for example, having a thickness of about 1 mm and a width of about 10 mm) and this rubber strip is wound to form a tread shape in which the concave profile is provided. In view of excellent productivity, molding by extrusion is preferable, and strip winding molding is preferable since the concave profile can be set in detail, a problem of a shrink due to aging after molding by extrusion is not caused, and a tire in which a gauge of the tread is uniform in the circumference of the tire can be easily obtained.

The step (B) is a step of laminating the tread shape unvulcanized rubber composition obtained in the step (A) with other unvulcanized rubber compositions for tire member to produce an unvulcanized tire. The step (B) is not limited particularly and a production step of an unvulcanized tire generally used in the production of tires may be used. In the case where strip winding molding is used as the step (A), since the belt-like rubber strip is layered and a tread having a predetermined profile is formed in the molding machine, the step (B) is conducted at the same time as the step (A).

The above step (C) is a step of vulcanizing the unvulcanized tire obtained in the step (B) in the vulcanization mold, and is a step of producing a pneumatic tire by heating and vulcanizing the unvulcanized tire positioned in the vulcanization mold.

The unvulcanized tire heated in the vulcanization mold is pressed into the inner surface of the vulcanization mold by being vulcanized and inflated by pressure from a bladder described below. Here, the portion inside the vulcanization mold where the tread of the unvulcanized tire is pressed is provided with a convexity for constituting a predetermined tread pattern.

While ones generally used in the production of tires can be used as the vulcanization mold, in the present invention, as described above, a vulcanization mold, in which the position of the convexity for constituting the shoulder main groove is provided such that when assuming that the distance from the center C of the tread crown portion to the shoulder edge Se in the vulcanization mold is 1, the centerline of the convexity for the shoulder main groove obtained by a weighted average is provided at a position of 1/2 to 7/8 from the center of the crown (between q1 and q2 in FIG. 1) is used.

In the step (C), for example, as shown in FIG. 5, the unvulcanized tire 10 is positioned inside the vulcanization mold 20, and the vulcanization step can comprise an inside heating c 1 of heating the unvulcanized tire 10 from the inner cavity with a heating medium filled in the inner cavity of the unvulcanized tire 10, and an outside heating c2 of heating the unvulcanized tire 10 from the outer surface with the vulcanization mold 20. In the inner cavity surface of the unvulcanized tire 10, a vulcanization bladder 30 for conducting heat of the heating medium and providing a shaping pressure is loaded.

The inside heating c 1 is preferably an inside heating of heating the unvulcanized tire from the inner cavity side by filling the heating medium of 180 to 210°C for 20 seconds to 5 minutes into the inner cavity of the unvulcanized tire, since the crosslinking density of each member of the tire can be ensured and a reversion can be prevented.

Further, since a reversion can be prevented and the rubber can be ensured to enter a steel cord of the breaker, it is preferable that the inside heating c 1 comprises a first heating step using a first heating medium and a second heating step using a second heating medium.

In the first heating step, it is preferable that the inner pressure of the bladder is set to 14 to 15 MPa by filling steam of 180 to 210°C in the bladder as a first heating medium, and the time from the start of filling to the start of the second heating step is 20 seconds to 5 minutes, since the rubber can easily flow into the groove (between convexities) of the vulcanization mold in the second heating step in which the rubber is pressed by a high pressure.

Further, in the second heating step, it is preferable that nitrogen gas at normal temperature is filled in the bladder as a second heating medium and the inner pressure of the bladder is 21 to 28 MPa. In particular, since the tire during vulcanization can be strongly pressed into the vulcanization mold, the temperature is maintained, and a topping rubber

of a breaker or a case other than the tread can be contacted with a space between the twisted strands of the cord and a tiny adhesion surface of the cord, it is preferable that the inner pressure of the bladder is higher than that of the first heating step. In addition, if oxygen of not less than 250 ppm exists in the second heating medium, an oxidative degradation of the bladder arises and the lifetime of the bladder is significantly shorten. Therefore it is preferable to fill the purity-controlled nitrogen gas. Additionally, the second heating step starts immediately after the first heating step is finished. The vulcanizer is opened at the same time as the start of deaeration of the heating medium in the bladder.

The outside heating c2 is preferably an outside heating of heating the unvulcanized tire from the outer surface side by heating the vulcanization mold to 160 to 175°C, since the crosslinking density of each member of the tire can be ensured and a reversion can be prevented. Here, the heating time of the outside heating c2 preferably corresponds to a time from the start of filling of the first heating medium to the start of deaeration of the heating medium in the bladder.

The pneumatic tire produced by the production method of a pneumatic tire of the present invention is, by use of the rubber composition for a tread constituting the tread that comprises silica, a pneumatic tire where tire performance such as wet performance is maintained while a generation of TGC is prevented, and therefore it can be suitably used for passenger cars and commercial cars.

EXAMPLES

Though the present invention is explained based on Examples, the present invention is not limited only thereto.

Various kinds of chemicals used in Examples and Comparative Examples are described below.

NR: TSR 20
High-cis BR: CB 25 manufactured by Lanxess AG (Nd-catalyzed high-cis BR, Mooney viscosity $ML_{1+4}$: 44, Mw/Mn: 1.78, Mw: 500,000, Mn: 280,000, cis 1,4 bond content: 96.2% by mass, trans 1,4 bond content: 3.1% by mass, vinyl content: 0.7% by mass)
Modified BR: N103 manufactured by Asahi Kasei Chemicals Corporation (end-modified BR having an end modified with a mixture of tetraglycidyl-1,3-bisaminomethylcyclohexane and its oligomer component, Mw/Mn: 1.19, Mw: 550,000, Mn: 460,000, vinyl content: 12% by mass, cis 1,4 bond content: 38% by mass, trans 1,4 bond content: 50% by mass)
Modified S-SBR: HPR355 manufactured by JSR Corporation (bound styrene content: 28% by mass, vinyl content: 56% by mass)
Carbon black: SHOBLACK N220 manufactured by CABOT Japan K. K. (N220, BET: 114 $m^2/g$)
Silica 1: ULTRASIL VN3 manufactured by Evonik Degussa GmbH (BET: 175 $m^2/g$)
Silica 2: Z1085Gr manufactured by Rhodia Co., Ltd. (BET: 90 $m^2/g$)
Silica 3: ULTRASIL U360 manufactured by Evonik Degussa GmbH (BET: 50 $m^2/g$)
Silica 4: ULTRASIL U9000Gr manufactured by Evonik Degussa GmbH (BET: 235 $m^2/g$)
Silane coupling agent 1: Si75 (bis(3-triethoxysilylpropyl)disulfide) manufactured by Evonik Degussa GmbH
Silane coupling agent 2: NXT (8-mercaptooctanoyltriethoxysilane) manufactured by Momentive Performance Materials INC.
Resin C10: NOVARES C10 (liquid coumarone-indene resin, softening point: 5 to 15° C) manufactured by Rutgers Chemicals
Resin C100: NOVARES C100 (liquid coumarone-indene resin, softening point: 100° C) manufactured by Rutgers Chemicals
Petroleum C5 resin: MARUKAREZ T-100AS (aliphatic petroleum resin mainly composed of olefins and diolefins in the C5 fraction obtained by naphtha cracking, softening point: 102°C) manufactured by Maruzen Petrochemical Co., Ltd.
Aromatic vinyl polymer: SYLVARES SA 85 (copolymer of $\alpha$-methylstyrene and styrene, softening point: 85°C, Mw: 1000) manufactured by Arizona Chemical Corporation
Oil: VIVATEC500 (TDAE oil) manufactured by H&R Co., Ltd.
Wax: OZOACE 355 manufactured by Nippon Seiro Co., Ltd.
Anti-aging agent 6PPD: Antigen 6C (N-phenyl-N'-(1,3-dimethylbutyl)-p-phenylenediamine) manufactured by Sumitomo Chemical Co. LTD.
Anti-aging agent TMQ: Nocrac 224

(2,2,4-trimethyl-1,2-dihydroquinoline polymer) manufactured by OUCHI SHINKO CHEMICAL INDUSTRIAL CO., LTD.
Stearic acid: stearic acid Tsubaki manufactured by NOF Corporation
Mold release agent 1: WB16 (a mixture of metal salt of fatty acid (fatty acid calcium) and fatty acid amide) manufactured by Struktol Co., Ltd.
Mold release agent 2: Aflux37 (containing amide ester) manufactured by Rhein Chemie Corporation
Mold release agent 3: Aflux16 (a mixture of fatty acid calcium salt and amide ester) manufactured by Rhein Chemie Corporation
Zinc stearate: zinc stearate manufactured by NOF Corporation
Zinc oxide: Ginrei R manufactured by TOHO ZINC CO., LTD.
Sulfur: HK200-5 (5% oil-containing sulfur powder) manufactured by Hosoi Chemical Industry Co., Ltd.
Vulcanization accelerator TBBS: Nocceler NS
(N-tert-butyl-2-benzothiazylsulfeneamide) manufactured by OUCHI
SHINKO CHEMICAL INDUSTRIAL CO., LTD.
Vulcanization accelerator DPG: Nocceler D (1,3-Diphenylguanidine) manufactured by OUCHI SHINKO CHEMICAL INDUSTRIAL CO., LTD.
Crosslinking aid SDT-50: SDT-50 (compound represented by the general formula (2), x: not less than 1, $R^5$ to $R^8$: 2-ethylhexyl group, active ingredient content: 50% by mass) manufactured by Rhein Chemie Corporation

EXAMPLES 1 to 39 and COMPARATIVE EXAMPLES 1 to 14 Kneading step

By use of various kinds of chemicals shown in Tables 1 to 4, a kneading step X of kneading the rubber components, all of carbon black and a half amount of silica (compound temperature at the time of discharge from mixer: 150°C, four minutes); a kneading step Y of adding other components other than vulcanizing agents (sulfur, vulcanization accelerator, crosslinking aid) and then kneading (compound temperature at the time of discharge from mixer: 150°C, three minutes); and a kneading step F of further adding the vulcanization agents and then kneading (compound temperature at the time of discharge from mixer: 100°C, three minutes) were conducted to obtain unvulcanized rubber compositions.

Tread extruding step (step A)

The obtained unvulcanized rubber composition was molded by extrusion with a predetermined extruder to obtain a tread shape unvulcanized rubber composition having a predetermined profile. The sectional area, width and depth of the concave profile provided in each tread shape unvulcanized rubber composition with respect to the convexity for the shoulder main groove in the vulcanization mold are shown in Tables 1 to 4.

The concave profile provided in the tread shape unvulcanized rubber composition was provided such that the centerline of the convexity for the shoulder main groove of the vulcanization mold, which was obtained by a weighted average, used in each Example and Comparative Example became a centerline of the concave profile. Assuming that the distance from the center of the crown to the shoulder edge is 1, the distance from the center of the crown to the center of the convexity for the shoulder main groove, the shape of the convexity for the shoulder main groove, and the sectional area of the shoulder main groove with respect to the total sectional area of the grooves are shown in Tables 1 to 4.

Tire molding step (step B)

The obtained tread shape unvulcanized rubber compositions were laminated with other components of a tire in a molding machine to produce unvulcanized tires.

Vulcanization step (step C)

The unvulcanized tires were heated and vulcanized by press-vulcanization using the inside and outside heating to produce tires for test (radial tire for passenger cars, size: 195/65R15).

The inside heating comprises the first heating step of using steam of 200°C as a first heating medium and the second heating step of using nitrogen gas of normal temperature (23°C) as a second heating medium. The inner pressure of the vulcanization bladder in the first vulcanization step was 15 MPa and the inner pressure of the vulcanization bladder in the second vulcanization step was 24 MPa. The temperature of the vulcanization mold in the outside heating and the time of the first heating step are shown in Tables 1 to 4.

The following tests were conducted using each tire for test. In Comparative Examples 3 and 4, however, since it was difficult to produce a tire for test that was capable of being subjected to a test of in-vehicle running, a wet grip

performance test and an abrasion resistance test were not conducted.

<Cut opening test>

In the bottom center portion of the shoulder main groove in the above test tire before inflation, a cut having the length of 8 mm along the circumferential direction of the tire and the depth of 2 mm was made with a razor (thickness of a blade: 0.25 mm). The maximum width of opening of the cut was measured at the time when the inner pressure of the tire was increased to the prescribed maximum internal pressure. The measurement of opening of the cut was conducted by pouring white powder of chalk near the cut, copying the form of the cut in clear adhesive tape, and measuring the width of the groove form. Moreover, the cut was provided on four places on the circumference of the same tire and the measurements were conducted, and the average thereof was regarded as a cut opening amount. The less the cut opening amount is, the less the inflation deformation arises. It is noted that a target value of the cut opening amount is not more than 0.150 mm.

<Tread tackiness to casing>

When the tread shape unvulcanized rubber composition was laminated on the breaker member in the molding machine, tackiness with the breaker topping rubber composition was evaluated. If this tackiness is insufficient, a space is generated between the tread and the breaker, and air-in and vulcanization adhesion defect are generated. Though tackiness is deteriorated if zinc stearate is generated on the surface of the raw tread extrudate, tackiness is improved by compounding a petroleum C5 resin and the like. This tackiness was evaluated on a scale up to 5. The higher the score is, the more excellent the adhesion property with the rubber composition constituting the jointless band or the breaker is. In addition, a target value of this tackiness is not less than 3.

<Wet grip performance test>

The tires for test were loaded on all wheels of a vehicle (FF2000 cc of domestic production) and the braking distance was measured from the place where the brake was applied at the speed of 100 km/h on a wet asphalt road. The braking distance of Comparative Example 1 was regarded as 100 and the wet grip performance of each composition was shown with an index obtained by the following calculation formula. The larger the wet grip performance index is, the more excellent the wet grip performance is. Additionally, a target value of the wet grip performance index is not less than 97.

$$\text{(Wet grip performance index)} = \text{(braking distance of Comparative Example 1)} / \text{(braking distance of each composition)} \times 100$$

<Abrasion resistance test>

The test tires were loaded on all wheels of a vehicle (FF2000 cc of domestic production), followed by the in-vehicle running on a test course. The decreased amount of the depth of patterned grooves was calculated after the running of approximately 30,000 km. The decreased amount of Comparative Example 1 was regarded as 100 and the amount was shown with indexes obtained by the following calculating formula. The larger the abrasion resistance index is, the better the abrasion resistance is. Additionally, a target value of the abrasion resistance index is not less than 90.

$$\text{(Abrasion resistance index)} = \text{(decreased amount of Comparative Example 1)} / \text{(decreased amount of each composition)} \times 100$$

TABLE 1

| | EXAMPLE | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 35 |
| Compounding amount (part by mass) | | | | | | | | | | | | | |
| Kneading step X | | | | | | | | | | | | | |
| NR | - | - | - | - | - | - | - | - | - | - | - | - | - |
| High-cis BR | 25 | 25 | 25 | 25 | 25 | 25 | 25 | 25 | 25 | 25 | 25 | 25 | 25 |
| Modified S-SBR | 75 | 75 | 75 | 75 | 75 | 75 | 75 | 75 | 75 | 75 | 75 | 75 | 75 |
| Carbon black | 25 | 5 | 5 | 55 | 25 | 25 | 25 | 25 | 25 | 25 | 25 | 25 | 25 |
| Kneading step X & Y | | | | | | | | | | | | | |
| Silica 1 | 70 | 90 | - | 40 | 70 | 70 | 70 | 70 | 70 | 70 | 70 | 70 | 70 |
| Silica 2 | - | - | 115 | - | - | - | - | - | - | - | - | - | - |
| Silica 3 | - | - | - | - | - | - | - | - | - | - | - | - | - |
| Silica 4 | - | - | - | - | - | - | - | - | - | - | - | - | - |
| Kneading step Y | | | | | | | | | | | | | |
| Silane coupling agent 1 | 5.6 | 7.2 | 7.2 | 3.2 | 5.6 | 5.6 | 5.6 | 5.6 | 5.6 | 5.6 | 5.6 | 5.6 | 5.6 |
| Resin C10 | 4 | 4 | 4 | 4 | 4 | 4 | 4 | 4 | 4 | 4 | 4 | 4 | 4 |
| Resin C100 | | | | | | | - | - | - | - | - | - | - |
| Petroleum C5 resin | | | | | | | - | - | - | - | - | - | - |
| Aromatic vinyl polymer | 4 | 4 | 4 | 4 | 4 | 4 | 4 | 4 | 4 | 4 | 4 | 4 | 4 |
| Oil | 12 | 12 | 24 | 12 | 12 | 12 | 12 | 12 | 12 | 12 | 12 | 12 | 12 |
| Wax | 1.5 | 1.5 | 1.5 | 1.5 | 1.5 | 1.5 | 1.5 | 1.5 | 1.5 | 1.5 | 1.5 | 1.5 | 1.5 |
| Anti-aging agent 6PPD | 3 | 3 | 3 | 3 | 3 | 3 | 3 | 3 | 3 | 3 | 3 | 3 | 3 |
| Anti-aging agent TMQ | 1 | 1 | 1 | 1 | 1 | 1 | 1 | 1 | 1 | 1 | 1 | 1 | 1 |
| Stearic acid | 3 | 3 | 3 | 3 | 4 | 5 | 3 | 3 | 2 | 3 | 3 | 3 | 3 |
| Mold release agent 1 | - | - | - | - | - | - | 1 | 2 | 3 | - | 1 | - | - |
| Mold release agent 2 | - | - | - | - | - | - | - | - | - | - | - | 2 | - |
| Mold release agent 3 | - | - | - | - | - | - | - | - | - | - | - | - | 2 |
| Zinc stearate | - | - | - | - | - | - | - | - | - | 1 | 1 | - | - |
| Zinc oxide | 2 | 2 | 2 | 2 | 2 | 2 | 2 | 2 | 2 | 2 | 2 | 2 | 2 |
| Compounding amount (part by mass) | | | | | | | | | | | | | |
| Kneading step F | | | | | | | | | | | | | |
| Sulfur | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator TBBS | 2 | 2 | 2 | 2 | 2 | 2 | 2 | 2 | 2 | 2 | 2 | 2 | 2 |

(continued)

| | EXAMPLE | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 35 |
| Vulcanization accelerator DPG | 2 | 2 | 2 | 2 | 2 | 2 | 2 | 2 | 2 | 2 | 2 | 2 | 2 |
| Crosslinking aid SDT-50 | | | | | | | | | | | | | |
| Vulcanization condition | | | | | | | | | | | | | |
| Mold temperature (°C) | 183 | 183 | 183 | 183 | 183 | 183 | 183 | 183 | 183 | 183 | 183 | 183 | 183 |
| Time of first heating (minute) | 2.5 | 2.5 | 2.5 | 2.5 | 2.5 | 2.5 | 2.5 | 2.5 | 2.5 | 2.5 | 2.5 | 2.5 | 2.5 |
| Concave profile | | | | | | | | | | | | | |
| Sectional area (%) | 60 | 60 | 60 | 60 | 60 | 60 | 60 | 60 | 60 | 60 | 60 | 60 | 60 |
| Depth (%) | 60 | 60 | 60 | 60 | 60 | 60 | 60 | 60 | 60 | 60 | 60 | 60 | 60 |
| Width (%) | 120 | 120 | 120 | 120 | 120 | 120 | 120 | 120 | 120 | 120 | 120 | 120 | 120 |
| Convexity for shoulder main groove | | | | | | | | | | | | | |
| Distance from crown | 0.6 | 0.6 | 0.6 | 0.6 | 0.6 | 0.6 | 0.6 | 0.6 | 0.6 | 0.6 | 0.6 | 0.6 | 0.6 |
| Shape | U | U | U | U | U | U | U | U | U | U | U | U | U |
| Sectional area (%) | 25 | 25 | 25 | 25 | 25 | 25 | 25 | 25 | 25 | 25 | 25 | 25 | 25 |
| Evaluation result | | | | | | | | | | | | | |
| Cut opening (mm) | 0.100 | 0.085 | 0.055 | 0.072 | 0.080 | 0.065 | 0.076 | 0.063 | 0.076 | 0.076 | 0.072 | 0.065 | 0.065 |
| Tread tackiness to casing | | 4 | 4 | 4 | 4 | 3 | 4 | 4 | 4 | 3 | 3 | 4 | 4 |
| Wet grip performance | 101 | 107 | 103 | 80 | 103 | 103 | 102 | 103 | 102 | 100 | 100 | 102 | 102 |
| Abrasion resistance | 102 | 105 | 94 | 112 | 103 | 103 | 103 | 103 | 103 | 97 | 96 | 103 | 103 |

TABLE 2

| | EXAMPLE | | | | | | | | | | | | |
|---|---|---|---|---|---|---|---|---|---|---|---|---|---|
| | 13 | 14 | 15 | 16 | 17 | 18 | 19 | 20 | 21 | 22 | 23 | 24 | 25 |
| Compounding amount (part by mass) | | | | | | | | | | | | | |
| Kneading step X | | | | | | | | | | | | | |
| NR | - | - | - | - | - | - | - | - | - | - | - | - | - |
| High-cis BR | 25 | 25 | 25 | 25 | 25 | 25 | 25 | 25 | 25 | 25 | 25 | 25 | 25 |
| Modified S-SBR | 75 | 75 | 75 | 75 | 75 | 75 | 75 | 75 | 75 | 75 | 75 | 75 | 75 |
| Carbon black | 25 | 25 | 25 | 25 | 25 | 25 | 25 | 25 | 25 | 25 | 5 | 5 | 5 |
| Kneading step X & Y | | | | | | | | | | | | | |
| Silica 1 | 70 | 70 | 70 | 70 | 70 | 70 | 70 | 70 | 70 | 70 | 90 | 90 | 90 |
| Silica 2 | - | - | - | - | - | - | - | - | - | - | - | - | - |
| Silica 3 | - | - | - | - | - | - | - | - | - | - | - | - | - |
| Silica 4 | - | - | - | - | - | - | - | - | - | - | - | - | - |
| Kneading step Y | | | | | | | | | | | | | |
| Silane coupling agent 1 | 5.6 | 5.6 | 5.6 | 5.6 | 5.6 | 5.6 | 5.6 | 5.6 | 5.6 | 5.6 | 7.2 | 7.2 | 7.2 |
| Resin C10 | 4 | 4 | 4 | 4 | 4 | 4 | 4 | 4 | 4 | 4 | 4 | 4 | 4 |
| Resin C 100 | - | - | - | - | - | - | - | - | - | - | - | - | - |
| Petroleum C5 resin | - | - | - | - | - | - | - | - | - | - | - | - | - |
| Aromatic vinyl polymer | 4 | 4 | 4 | 4 | 4 | 4 | 4 | 4 | 4 | 4 | 4 | 4 | 4 |
| Oil | 12 | 12 | 12 | 12 | 12 | 12 | 12 | 12 | 12 | 12 | 12 | 12 | 12 |
| Wax | 1.5 | 1.5 | 1.5 | 1.5 | 1.5 | 1.5 | 1.5 | 1.5 | 1.5 | 1.5 | 1.5 | 1.5 | 1.5 |
| Anti-aging agent 6PPD | 3 | 3 | 3 | 3 | 3 | 3 | 3 | 3 | 3 | 3 | 3 | 3 | 3 |
| Anti-aging agent TMQ | 1 | 1 | 1 | 1 | 1 | 1 | 1 | 1 | 1 | 1 | 1 | 1 | 1 |
| Stearic acid | 4 | 4 | 3 | 3 | 3 | 3 | 3 | 3 | 3 | 3 | 3 | 3 | 3 |
| Mold release agent 1 | - | - | - | - | - | - | - | - | - | - | - | - | - |
| Mold release agent 2 | - | - | - | - | - | - | - | - | - | - | - | - | - |
| Zinc stearate | - | - | - | - | - | - | - | - | - | - | - | - | - |
| Zinc oxide | 0.5 | 3 | 2 | 2 | 2 | 2 | 2 | 2 | 2 | 2 | 2 | 2 | 2 |
| Compounding amount (part by mass) | | | | | | | | | | | | | |
| Kneading step F | | | | | | | | | | | | | |
| Sulfur | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator TBBS | 2 | 2 | 2 | 2 | 2 | 2 | 2 | 2 | 2 | 2 | 2 | 2 | 2 |
| Vulcanization accelerator DPG | 2 | 2 | 2 | 2 | 2 | 2 | 2 | 2 | 2 | 2 | 2 | 2 | 2 |

(continued)

| | EXAMPLE | | | | | | | | | | | | |
|---|---|---|---|---|---|---|---|---|---|---|---|---|---|
| | 13 | 14 | 15 | 16 | 17 | 18 | 19 | 20 | 21 | 22 | 23 | 24 | 25 |
| Crosslinking aid SDT-50 | - | - | - | - | - | - | - | - | - | - | - | - | - |
| Vulcanization condition | | | | | | | | | | | | | |
| Mold temperature (°C) | 183 | 183 | 183 | 183 | 183 | 183 | 183 | 170 | 160 | 190 | 170 | 160 | 190 |
| Time of first heating (minute) | 2.5 | 2.5 | 2.5 | 2.5 | 2.5 | 2.5 | 2.5 | 2.5 | 2.5 | 2.5 | 2.5 | 2.5 | 2.5 |
| Concave profile | | | | | | | | | | | | | |
| Sectional area (%) | 60 | 60 | 30 | 80 | 100 | 60 | 60 | 60 | 60 | 60 | 60 | 60 | 60 |
| Depth (%) | 60 | 60 | 30 | 80 | 90 | 40 | 40 | 60 | 60 | 60 | 60 | 60 | 60 |
| Width (%) | 120 | 120 | 120 | 120 | 120 | 120 | 160 | 120 | 120 | 120 | 120 | 120 | 120 |
| Convexity for shoulder main groove | | | | | | | | | | | | | |
| Distance from crown | 0.6 | 0.6 | 0.6 | 0.6 | 0.6 | 0.6 | 0.6 | 0.6 | 0.6 | 0.6 | 0.6 | 0.6 | 0.6 |
| Shape | U | U | U | U | U | U | U | U | U | U | U | U | U |
| Sectional area (%) | 25 | 25 | 25 | 25 | 25 | 25 | 25 | 25 | 25 | 25 | 25 | 25 | 25 |
| Evaluation result | | | | | | | | | | | | | |
| Cut opening (mm) | 0.112 | 0.074 | 0.150 | 0.085 | 0.087 | 0.172 | 0.185 | 0.112 | 0.105 | 0.077 | 0.135 | 0.131 | 0.104 |
| Tread tackiness to casing | 5 | 3 | 4 | 4 | 4 | 4 | 4 | 4 | 4 | 3 | 4 | 4 | 4 |
| Wet grip performance | 99 | 100 | 99 | 100 | 100 | 99 | 99 | 100 | 101 | 98 | 107 | 108 | 96 |
| Abrasion resistance | 11 | 95 | 99 | 100 | 100 | 99 | 99 | 101 | 103 | 98 | 106 | 108 | 103 |

TABLE 3

| | EXAMPLE | | | | | | | | | | | | |
|---|---|---|---|---|---|---|---|---|---|---|---|---|---|
| | 26 | 27 | 28 | 29 | 30 | 31 | 32 | 33 | 34 | 36 | 37 | 38 | 39 |
| Compounding amount (part by mass) | | | | | | | | | | | | | |
| Kneading step X | | | | | | | | | | | | | |
| NR | - | - | - | - | - | 25 | - | - | - | - | - | - | - |
| High-cis BR | 25 | 25 | 25 | 25 | 25 | | 25 | 25 | 25 | 40 | 40 | 30 | 25 |
| Modified BR | - | - | - | - | - | - | - | - | - | - | - | 30 | - |
| Modified S-SBR | 75 | 75 | 75 | 75 | 75 | 75 | 75 | 75 | 75 | 60 | 60 | 40 | 75 |
| Carbon black | 25 | 25 | 25 | 25 | 25 | 25 | 25 | 25 | 25 | 55 | 55 | 25 | 25 |
| Kneading step X & Y | | | | | | | | | | | | | |
| Silica 1 | 70 | 70 | 70 | 70 | | 70 | 70 | 70 | 70 | 40 | 40 | 70 | 70 |
| Silica 2 | - | - | - | - | - | - | - | - | - | - | - | - | - |
| Silica 3 | - | - | - | - | - | - | - | - | - | - | - | - | - |
| Silica 4 | - | - | - | - | 70 | - | - | - | - | - | - | - | - |
| Kneading step Y | | | | | | | | | | | | | |
| Silane coupling agent 1 | 5.6 | 5.6 | 5.6 | 5.6 | 7.0 | 5.6 | 5.6 | 5.6 | 5.6 | 3.2 | 3.2 | 4.8 | - |
| Silane coupling agent 2 | | | | | | | | | | | | | 4.2 |
| Resin C10 | 4 | 4 | 4 | 4 | 4 | 4 | 4 | 4 | 4 | | | | - |
| Resin C100 | - | - | - | - | - | - | - | - | - | 4 | 4 | 4 | - |
| Petroleum C5 resin | - | - | - | - | - | - | - | - | - | - | - | - | - |
| Aromatic vinyl polymer | 4 | 4 | 4 | 4 | 4 | 4 | 4 | 4 | 4 | 12 | 12 | 12 | 4 |
| Oil | 12 | 12 | 12 | 12 | 12 | 12 | 12 | 12 | 12 | 4 | 4 | 10 | 12 |
| Wax | 1.5 | 1.5 | 1.5 | 1.5 | 1.5 | 1.5 | 1.5 | 1.5 | 1.5 | 1.5 | 1.5 | 1.5 | 1.5 |
| Anti-aging agent 6PPD | 3 | 3 | 3 | 3 | 3 | 3 | 3 | 3 | 3 | 3 | 3 | 3 | |
| Anti-aging agent TMQ | 1 | 1 | 1 | 1 | 1 | 1 | 1 | 1 | 1 | 1 | 1 | 1 | 1 |
| Stearic acid | 3 | 3 | 3 | 3 | 3 | 3 | 3 | 3 | 3 | 3 | 3 | 3 | 3 |
| Mold release agent 1 | - | - | - | - | - | - | - | - | - | - | - | - | - |
| Mold release agent 2 | - | - | - | - | - | - | - | - | - | - | - | - | - |
| Mold release agent 3 | - | - | - | - | - | - | - | - | - | - | 2 | 2 | - |
| Compounding amount (part by mass) | | | | | | | | | | | | | |
| Kneading step Y | | | | | | | | | | | | | |
| Zinc stearate | - | - | - | - | - | - | - | - | - | - | - | - | - |
| Zinc oxide | 2 | 2 | 2 | 2 | 2 | 2 | 2 | 2 | 2 | 2 | 2 | 2 | 2 |

(continued)

| | EXAMPLE | | | | | | | | | | | | |
|---|---|---|---|---|---|---|---|---|---|---|---|---|---|
| | 26 | 27 | 28 | 29 | 30 | 31 | 32 | 33 | 34 | 36 | 37 | 38 | 39 |
| Kneading step F | | | | | | | | | | | | | |
| Sulfur | 1.5 | 1.5 | 1.5 | 1.5 | 1.5 | 1.5 | 1.5 | 1.5 | 1.5 | 1.5 | 1.5 | 1.5 | 1.0 |
| Vulcanization accelerator TBBS | 2 | 2 | 2 | 2 | 2 | 2 | 2 | 2 | 2 | 2 | 2 | 2.5 | 2 |
| Vulcanization accelerator DPG | 2 | 2 | 2 | 2 | 2 | 2 | 2 | | 1.5 | 2 | 2 | 2 | 2 |
| Crosslinking aid SDT-50 | - | - | - | - | - | - | - | 2 | 0.5 | - | - | - | - |
| Vulcanization condition | | | | | | | | | | | | | |
| Mold temperature (°C) | 183 | 183 | 183 | 183 | 183 | 183 | 170 | 183 | 183 | 183 | 183 | 183 | 183 |
| Time of first heating (minute) | 1 | 0.5 | 2.5 | 2.5 | 2.5 | 2.5 | 5 | 2.5 | 2.5 | 2.5 | 2.5 | 2.5 | 2.5 |
| Concave profile | | | | | | | | | | | | | |
| Sectional area (%) | 60 | 60 | 60 | 60 | 60 | 60 | 60 | 60 | 60 | 60 | 60 | 60 | 60 |
| Depth (%) | 60 | 60 | 60 | 60 | 60 | 60 | 60 | 60 | 60 | 60 | 60 | 60 | 60 |
| Width (%) | 120 | 120 | 120 | 120 | 120 | 120 | 120 | 120 | 120 | 120 | 120 | 120 | 120 |
| Convexity for shoulder main groove | | | | | | | | | | | | | |
| Distance from crown | 0.6 | 0.6 | 0.5 | 0.75 | 0.6 | 0.6 | 0.6 | 0.6 | 0.6 | 0.6 | 0.6 | 0.6 | 0.6 |
| Shape | U | U | U | U | U | U | U | U | U | U | U | U | U |
| Sectional area (%) | 25 | 25 | 25 | 25 | 25 | 25 | 25 | 25 | 25 | 25 | 25 | 25 | 25 |
| Evaluation result | | | | | | | | | | | | | |
| Cut opening (mm) | 0.071 | 0.067 | 0.065 | 0.150 | 0.122 | 0.097 | 0.122 | 0.088 | 0.095 | 0.071 | 0.041 | 0.053 | 0.087 |
| Tread tackiness to casing | 4 | 4 | 4 | 4 | 4 | 4 | 4 | 4 | 4 | 4 | 4 | 5 | 4 |
| Wet grip performance | 101 | 101 | 98 | 100 | 104 | 100 | 97 | 101 | 101 | 90 | 92 | 100 | 101 |
| Abrasion resistance | 103 | 104 | 102 | 98 | 112 | 91 | 96 | 104 | 102 | 128 | 127 | 129 | 112 |

TABLE 4

| | COMPARATIVE EXAMPLE | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Compounding amount (part by mass) | | | | | | | | | | | | | | |
| Kneading step X | | | | | | | | | | | | | | |
| NR | | | | | | | | | | | | | | - |
| High-cis BR | 25 | 25 | 25 | 25 | 25 | 25 | 25 | 25 | 25 | 25 | 25 | 25 | 25 | 25 |
| Modified S-SBR | 75 | 75 | 75 | 75 | 75 | 75 | 75 | 75 | 75 | 75 | 75 | 75 | 75 | 75 |
| Carbon black | 25 | 25 | 25 | 25 | 25 | 25 | 25 | 65 | 5 | 25 | 5 | 25 | 25 | 25 |
| Kneading step X & Y | | | | | | | | | | | | | | |
| Silica 1 | 70 | 70 | 70 | 70 | 70 | 70 | 70 | 30 | - | 30 | 90 | 70 | 70 | 70 |
| Silica 2 | - | - | - | - | - | - | - | - | 125 | - | - | - | - | - |
| Silica 3 | - | - | - | - | - | - | - | - | - | 40 | - | - | - | - |
| Silica 4 | - | - | - | - | - | - | - | - | - | - | - | - | - | - |
| Kneading step Y | | | | | | | | | | | | | | |
| Silane coupling agent 1 | 5.6 | 5.6 | 5.6 | 5.6 | 5.6 | 5.6 | 5.6 | 2.4 | 9.0 | 5.6 | 7.2 | 5.6 | 5.6 | 5.6 |
| Resin C10 | 4 | 4 | 4 | 4 | 4 | 4 | 4 | 4 | 4 | 4 | 4 | 4 | 4 | 4 |
| Resin C100 | - | - | - | - | - | - | - | - | - | - | - | - | - | - |
| Petroleum C5 resin | - | - | - | - | - | - | - | - | - | - | - | - | - | - |
| Aromatic vinyl polymer | 4 | 4 | 4 | 4 | 4 | 4 | 4 | 4 | 4 | 4 | 4 | 4 | 4 | 4 |
| Oil | 12 | 12 | 12 | 12 | 12 | 12 | 12 | 12 | 12 | 12 | 12 | 12 | 12 | 12 |
| Wax | 1.5 | 1.5 | 1.5 | 1.5 | 1.5 | 1.5 | 1.5 | 1.5 | 1.5 | 1.5 | 1.5 | 1.5 | 1.5 | 1.5 |
| Anti-aging agent 6PPD | 3 | 3 | 3 | 3 | 3 | 3 | 3 | 3 | 3 | 3 | 3 | 3 | 3 | 3 |
| Anti-aging agent TMQ | 1 | 1 | 1 | 1 | 1 | 1 | 1 | 1 | 1 | 1 | 1 | 1 | 1 | 1 |
| Stearic-acid | 1.5 | 6.5 | 3 | 3 | 3 | 3 | 3 | 3 | 2 | 3 | 2 | 1 | 3 | 1 |
| Mold release agent 1 | - | - | 3.5 | - | - | - | - | - | - | - | - | 2.0 | 2.5 | 3.5 |
| Mold release agent 2 | - | - | - | - | - | - | - | - | - | - | - | - | - | - |
| Zinc stearate | - | - | - | 3.5 | - | - | - | - | - | - | - | - | - | - |
| Zinc oxide | 2 | 2 | 2 | 2 | 2 | 2 | 2 | 2 | 2 | 2 | 2 | 2 | 2 | 2 |
| Compounding amount (part by mass) | | | | | | | | | | | | | | |
| Kneading step F | | | | | | | | | | | | | | |
| Sulfur | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator TBBS | 2 | 2 | 2 | 2 | 2 | 2 | 2 | 2 | 2 | 2 | 2 | 2 | 2 | 2 |
| Vulcanization accelerator DPG | 2 | 2 | 2 | 2 | 2 | 2 | 2 | 2 | 2 | 2 | 2 | 2 | 2 | 2 |

(continued)

| | COMPARATIVE EXAMPLE | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Crosslinking aid SDT-50 | - | - | - | - | - | - | - | - | - | - | - | - | - | - |
| Vulcanization condition | | | | | | | | | | | | | | |
| Mold temperature (°C) | 183 | 183 | 183 | 183 | 183 | 183 | 183 | 183 | 183 | 183 | 183 | 183 | 183 | 183 |
| Time of first heating (minute) | 2.5 | 2.5 | 2.5 | 2.5 | 2.5 | 2.5 | 2.5 | 2.5 | 2.5 | 2.5 | 2.5 | 2.5 | 2.5 | 2.5 |
| Concave profile | | | | | | | | | | | | | | |
| Sectional area (%) | 60 | 60 | 60 | 60 | 0 | 20 | 60 | 60 | 60 | 60 | 0 | 0 | 20 | 20 |
| Depth (%) | 60 | 60 | 60 | 60 | - | 60 | 60 | 60 | 60 | 60 | - | - | 60 | 60 |
| Width (%) | 120 | 120 | 120 | 120 | - | 120 | 120 | 120 | 120 | 120 | - | - | 120 | 120 |
| Convexity for shoulder main groove | | | | | | | | | | | | | | |
| Distance from crown | 0.6 | 0.6 | 0.6 | 0.6 | 0.6 | 0.6 | 0.88 | 0.6 | 0.6 | 0.6 | 0.6 | 0.6 | 0.6 | 0.6 |
| Shape | U | U | U | U | U | U | | U | U | U | U | U | U | U |
| Sectional area (%) | 25 | 25 | 25 | 25 | 25 | 25 | 10 | 25 | 25 | 25 | 25 | 25 | 25 | 25 |
| Evaluation result | | | | | | | | | | | | | | |
| Cut opening (mm) | 0.170 | 0.150 | 0.105 | 0.125 | 0.220 | 0.170 | 0.250 | 0.065 | 0.046 | 0.088 | 0.305 | 0.175 | 0.150 | 0.141 |
| Tread tackiness to casing | 5 | 2 | 1 | 1 | 4 | | 4 | 4 | 4 | 4 | 4 | 4 | 3 | 3 |
| Wet grip performance | 100 | 96 | x | x | 94 | 96 | 100 | 60 | 95 | 70 | 105 | 95 | 95 | 94 |
| Abrasion resistance | 100 | 103 | x | x | 95 | 98 | 91 | 118 | 90 | 70 | 96 | 93 | 98 | 96 |

As shown in Tables 1 to 4, it can be found that in Examples where a predetermined rubber composition is used and a concave profile in a predetermined size is provided in a predetermined position, a pneumatic tire in which a generation of a TGC is prevented while maintaining productivity and tire performance can be produced.

Explanation of Symbols

| | |
|---|---|
| 10 | Tire |
| 11 | Tread portion |
| 20 | Vulcanization mold |
| 30 | Vulcanization bladder |
| P | Concave profile |
| Q | Convexity for shoulder main groove |

## Claims

1. A production method of a pneumatic tire which has a tread composed of a rubber composition for a tread comprising 40 to 120 parts by mass of silica which has a BET specific surface area of 70 to 250 $m^2/g$ and 2.5 to 6 parts by mass of at least one selected from the group consisting of: stearic acid and a mold release agent comprising at least one selected from the group consisting of a metal salt of fatty acid, a fatty acid amide and an amide ester, based on 100 parts by mass of the rubber component, the production method comprising:

   (A) a step of molding an unvulcanized rubber composition for a tread to obtain a tread shape unvulcanized rubber composition provided with a concave profile,
   (B) a step of laminating the tread shape unvulcanized rubber composition obtained in the step (A) with other unvulcanized rubber compositions for tire member to obtain an unvulcanized tire, and
   (C) a step of vulcanizing the unvulcanized tire obtained in the step (B) in a vulcanization mold,

   wherein the concave profile provided in the tread shape unvulcanized rubber composition is placed at a position where a convexity for the shoulder main groove provided in the inner surface of the vulcanization mold is pressed in the step (C), a sectional area of the concave profile perpendicular to the circumferential direction of the tire is 30 to 100% of the sectional area of the convexity for the shoulder main groove, when assuming that the distance from the center of the crown of the tread to the shoulder edge is 1, the center of the convexity for the shoulder main groove is provided at a position of 1/2 to 7/8 from the center of the crown, and a sectional area of the convexity for the shoulder main groove perpendicular to the circumferential direction of the tire is not less than 5% of the total sectional area of the groove.

2. The production method of claim 1, wherein the vulcanization in the step (C) comprises:

   an inside heating c 1 of heating the unvulcanized tire from the inner cavity side by filling a heating medium of 180 to 210°C for 20 seconds to 5 minutes into the inner cavity of the unvulcanized tire; and
   an outside heating c2 of heating the unvulcanized tire from the outer surface thereof by heating the vulcanization mold to 160 to 175°C.

3. The production method of claim 1 or 2, wherein the rubber composition for a tread further comprises 0.5 to 2.5 parts by mass of zinc oxide and the content of at least one selected from the group consisting of: stearic acid and a mold release agent comprising at least one selected from the group consisting of a metal salt of fatty acid, a fatty acid amide and an amide ester is 3.5 to 6 parts by mass, based on 100 parts by mass of the rubber component.

4. The production method of any one of claims 1 to 3, wherein the rubber composition for a tread does not comprise diphenylguanidine but comprises, based on 100 parts by mass of the rubber component, 0.1 to 4 parts by mass of a compound represented by the following formula (1):

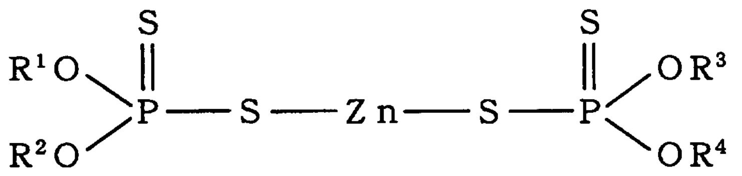

(1)

wherein each of $R^1$ to $R^4$ is independently a linear or branched alkyl group having 1 to 18 carbon atoms, or a cycloalkyl group having 5 to 12 carbon atoms,
and/or a compound represented by the following formula (2):

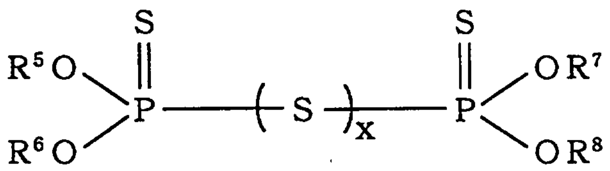

(2)

wherein x is an integer of 1 or more, and each of $R^5$ to $R^8$ is independently a linear or branched alkyl group having 1 to 18 carbon atoms, or a cycloalkyl group having 5 to 12 carbon atoms.

**5.** A pneumatic tire produced by the production method of any one of claims 1 to 4.

## Patentansprüche

**1.** Herstellungsverfahren eines Luftreifens, der eine Lauffläche aufweist, die aus einer Kautschukzusammensetzung für eine Lauffläche besteht, umfassend
40 bis 120 Masseteile Silica, das eine spezifische BET-Oberfläche von 70 bis 250 $m^2/g$ aufweist, und
2,5 bis 6 Masseteile von zumindest einem, das aus der Gruppe ausgewählt ist, bestehend aus: Stearinsäure und einem Formtrennmittel, das zumindest eines, das aus der Gruppe bestehend aus einem Metallsalz einer Fettsäure, einem Fettsäureamid und einem Amidester bezogen auf 100 Masseteile der Kautschukkomponente ausgewählt ist, umfasst, wobei das Herstellungsverfahren umfasst:

(A) einen Schritt eines Formens einer unvulkanisierten Kautschukzusammensetzung für eine Lauffläche, um eine Laufflächenform aus unvulkanisierter Kautschukzusammensetzung zu erhalten, die mit einem konkaven Profil versehen ist,
(B) einen Schritt eines Laminierens der Laufflächenform aus unvulkanisierter Kautschukzusammensetzung, die in dem Schritt (A) erhalten wurde, mit anderen unvulkanisierten Kautschukzusammensetzungen für ein Reifenelement, um einen unvulkanisierten Reifen zu erhalten, und
(C) einen Schritt eines Vulkanisierens des in Schritt (B) erhaltenen unvulkanisierten Reifens in einer Vulkanisationsform,

wobei das konkave Profil, das in der Laufflächenform aus unvulkanisierter Kautschukzusammensetzung vorgesehen ist, an einer Position angeordnet wird, an der eine Außenwölbung für die Schulterhauptrille, die in der Innenfläche der Vulkanisationsform vorgesehen ist, in dem Schritt (C) gepresst wird, eine Querschnittsfläche des konkaven Profils senkrecht zu der Umfangsrichtung des Reifens 30 bis 100% der Querschnittsfläche der Außenwölbung der Schulterhauptrille beträgt, unter der Annahme, dass der Abstand von der Mitte der Krone der Lauffläche zu der Schulterkante 1 ist, der Mittelpunkt der Außenwölbung für die Schulterhauptrille an einer Position von 1/2 bis 7/8 von der Mitte der Krone vorgesehen ist, und eine Querschnittsfläche der Außenwölbung für die Schulterhauptrille senkrecht zu der Umfangsrichtung des Reifens nicht kleiner als 5% der Gesamtquerschnittsfläche der Rille ist.

**2.** Herstellungsverfahren nach Anspruch 1, wobei die Vulkanisation in dem Schritt (C) umfasst:

ein innenseitiges Erwärmen c1 eines Erwärmens des unvulkanisierten Reifens von der Innenhohlraumseite durch Einfüllen eines Heizmediums von 180 bis 210°C für 20 Sekunden bis 5 Minuten in den Innenhohlraum des unvulkanisierten Reifens; und
ein außenseitiges Erwärmen c2 eines Erwärmens des unvulkanisierten Reifens von seiner Außenoberfläche

durch Erwärmen der Vulkanisationsform auf 160 bis 175°C.

3. Herstellungsverfahren nach Anspruch 1 oder 2, wobei die Kautschukzusammensetzung für eine Lauffläche ferner 0,5 bis 2,5 Masseteile Zinkoxid umfasst, und der Gehalt von zumindest einem, das aus der Gruppe ausgewählt ist, bestehend aus: Stearinsäure und einem Formtrennmittel, das zumindest eines, das aus der Gruppe bestehend aus einem Metallsalz einer Fettsäure, einem Fettsäureamid und einem Amidester ausgewählt ist, umfasst, 3,5 bis 6 Masseteile bezogen auf 100 Masseteile der Kautschukkomponente beträgt.

4. Herstellungsverfahren nach einem Ansprüche 1 bis 3, wobei die Kautschukzusammensetzung für eine Lauffläche nicht Diphenylguanidin sondern bezogen auf 100 Masseteile der Kautschukkomponente 0,1 bis 4 Masseteile einer Verbindung umfasst, die durch die folgende Formel (1) dargestellt ist:

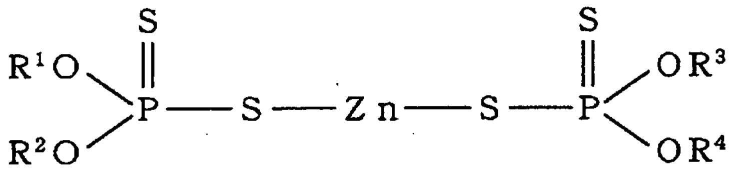

(1)

wobei ein jedes von $R^1$ bis $R^4$ unabhängig eine lineare oder verzweigte Alkylgruppe mit 1 bis 18 Kohlenstoffatomen oder eine Cycloalkylgruppe mit 5 bis 12 Kohlenstoffatomen ist,
und/oder eine Verbindung, die durch folgende Formel (2) dargestellt ist:

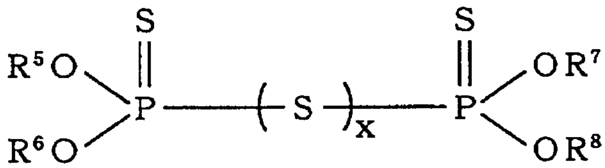

(2)

wobei x eine ganze Zahl von 1 oder mehr ist, und ein jedes von $R^5$ bis $R^8$ unabhängig eine lineare oder verzweigte Alkylgruppe mit 1 bis 18 Kohlenstoffatomen oder eine Cykloalkylgruppe mit 5 bis 12 Kohlenstoffatomen ist.

5. Luftreifen, der durch das Herstellungsverfahren nach einem der Ansprüche 1 bis 4 hergestellt ist.

**Revendications**

1. Procédé de production d'un pneumatique qui présente une bande de roulement constituée d'une composition de caoutchouc pour une bande de roulement comprenant
de 40 à 120 parties en masse de silice qui présente une surface spécifique BET de 70 à 250 $m^2/g$ et
de 2,5 à 6 parties en masse d'au moins un choisi dans le groupe constitué de :

acide stéarique et un agent de démoulage comprenant au moins un choisi dans le groupe constitué d'un sel de métal d'acide gras, d'un amide d'acide gras et d'un ester d'acide, rapporté à 100 parties en masse du constituant de caoutchouc, le procédé de production comprenant :

(A) une étape de moulage d'une composition de caoutchouc non vulcanisée pour une bande de roulement pour obtenir une composition de caoutchouc non vulcanisée en forme de bande de roulement munie d'un profil concave,
(B) une étape de stratification de la composition de caoutchouc non vulcanisée en forme de bande de roulement obtenue dans l'étape (A) avec d'autres compositions de caoutchouc non vulcanisées pour un élément de pneu afin d'obtenir un pneu non vulcanisé, et
(C) une étape de vulcanisation du pneu non vulcanisé obtenu dans l'étape (B) dans un moule de vulcanisation,

dans lequel le profil concave fourni dans la composition de caoutchouc non vulcanisée en forme de bande de roulement est placé à une position où une convexité pour la rainure principale d'épaulement fournie dans la surface

interne du moule de vulcanisation est comprimée dans l'étape (C), une section transversale du profil concave perpendiculaire à la direction circonférentielle du pneu est de 30 à 100 % de la section transversale de la convexité pour la rainure principale d'épaulement, lorsque l'on suppose que la distance à partir du centre de la couronne de la bande de roulement jusqu'au bord d'épaulement est de 1, le centre de la convexité pour la rainure principale d'épaulement est fournie à une position de 1/2 à 7/8 à partir du centre de la couronne, et une section transversale de la convexité pour la rainure principale d'épaulement perpendiculaire à la direction circonférentielle du pneu n'est pas inférieure à 5 % de la section transversale totale de la rainure.

**2.** Procédé de production selon la revendication 1, dans lequel la vulcanisation dans l'étape (C) comprend :

un chauffage interne c1 de chauffage du pneu non vulcanisé à partir du côté de cavité interne par introduction d'un milieu de chauffage de 180 à 210°C pendant de 20 secondes à 5 minutes dans la cavité interne de pneu non vulcanisé ; et

un chauffage externe c2 de chauffage du pneu non vulcanisé à partir de la surface externe de celui-ci par chauffage du moule de vulcanisation à de 160 à 175°C.

**3.** Procédé de production selon la revendication 1 ou 2, dans lequel la composition de caoutchouc pour une bande de roulement comprend de plus de 0,5 à 2,5 parties en masse d'oxyde de zinc et la teneur d'au moins un choisi dans le groupe constitué de : acide stéarique et un agent de démoulage comprenant au moins un choisi dans le groupe constitué d'un sel de métal d'acide gras, d'un amide d'acide gras et d'un ester d'amide est de 3,5 à 6 parties en masse, rapporté à 100 % en masse du constituant de caoutchouc.

**4.** Procédé de production selon l'une quelconque des revendications 1 à 3, dans lequel la composition de caoutchouc pour une bande de roulement ne comprend pas de diphénylguanidine mais comprend, rapporté à 100 parties en masse du constituant de caoutchouc, de 0,1 à 4 parties en masse d'un composé représenté par la formule (1) suivante :

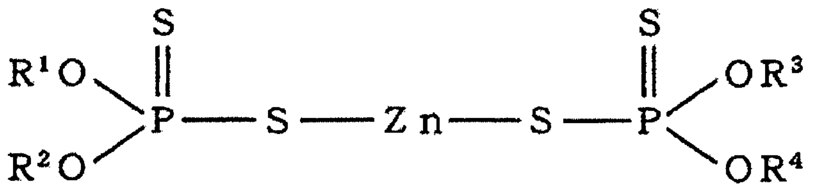

(1)

où chacun de $R^1$ à $R^4$ est indépendamment un groupe alkyle linéaire ou ramifié ayant de 1 à 18 atomes de carbone, ou un groupe cycloalkyle ayant de 5 à 12 atomes de carbone,
et/ou un composé représenté par la formule (2) suivante :

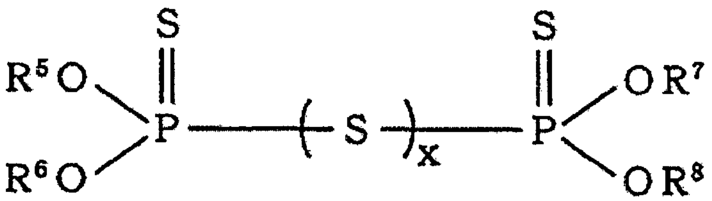

(2)

où x est un nombre entier de 1 ou supérieur, et chacun de $R^5$ à $R^8$ est indépendamment un groupe alkyle linéaire ou ramifié ayant de 1 à 18 atomes de carbone, ou un groupe cycloalkyle ayant de 5 à 12 atomes de carbone.

**5.** Pneumatique produit par le procédé de production selon l'une quelconque des revendications 1 à 4.

FIG. 1

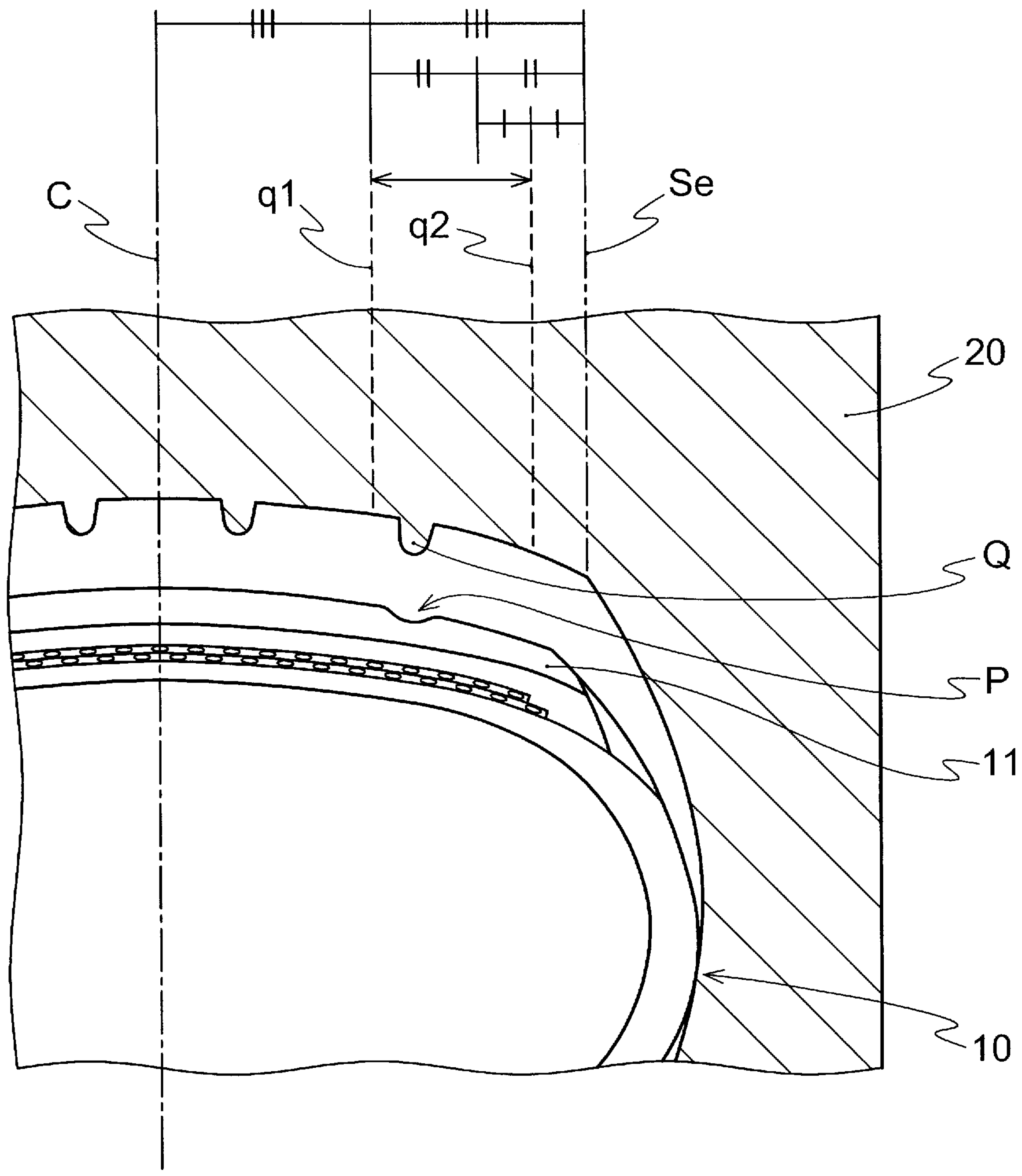

FIG. 2A

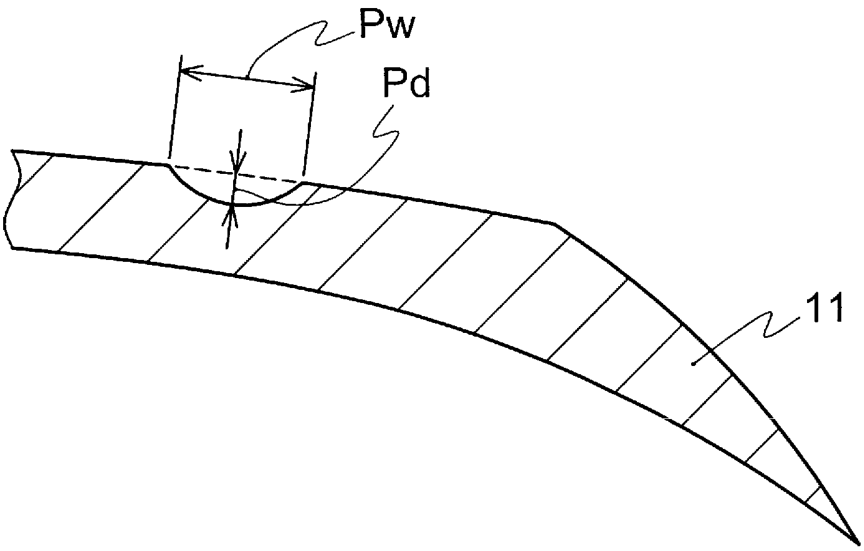


FIG. 2B

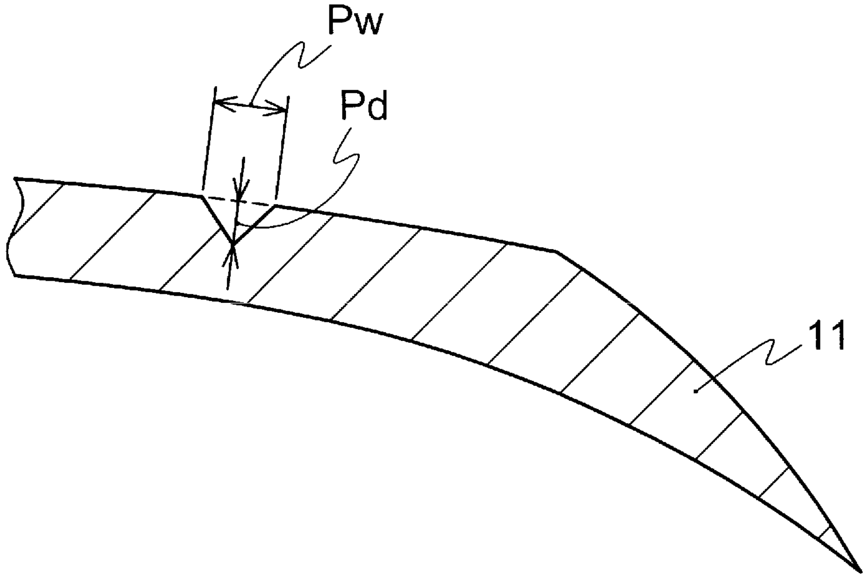


FIG. 2C

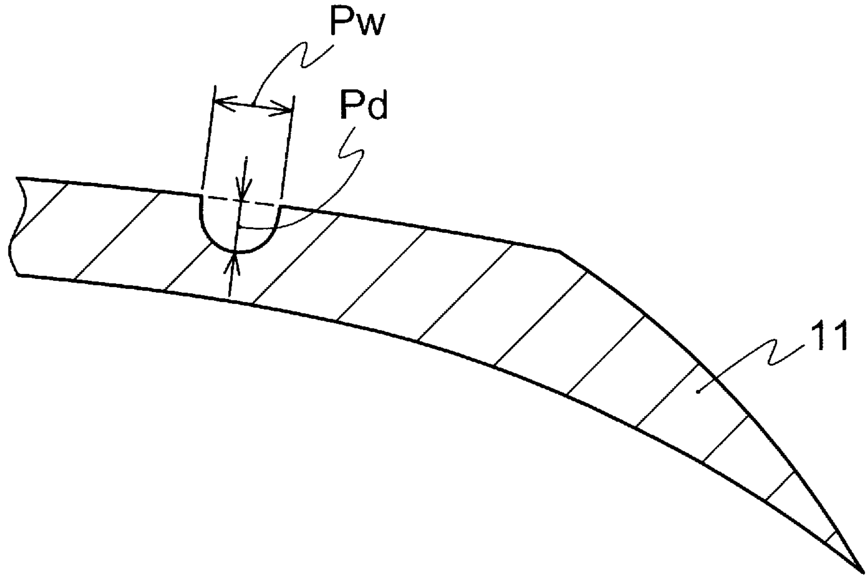

FIG. 3A

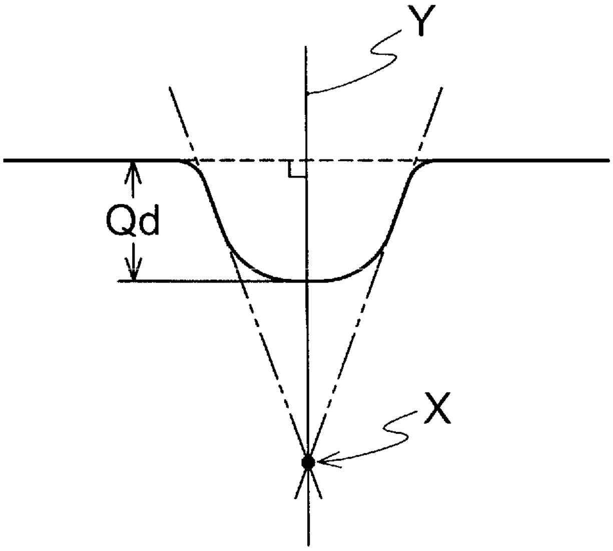


FIG. 3B

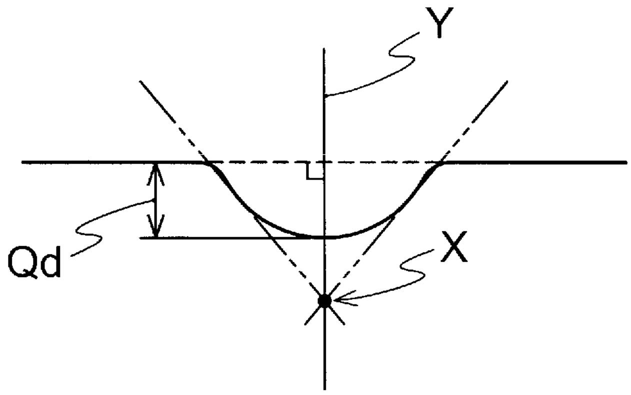


FIG. 3C

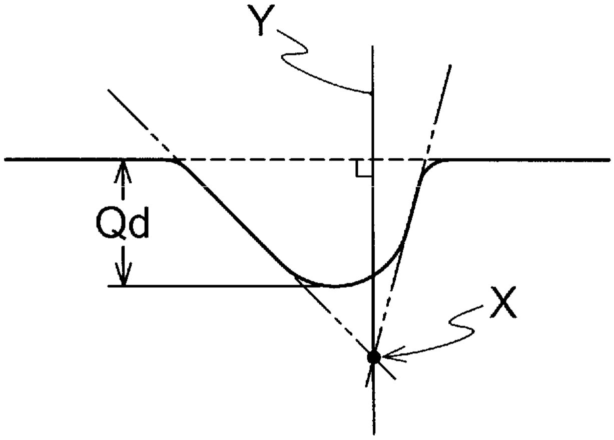

FIG. 4A

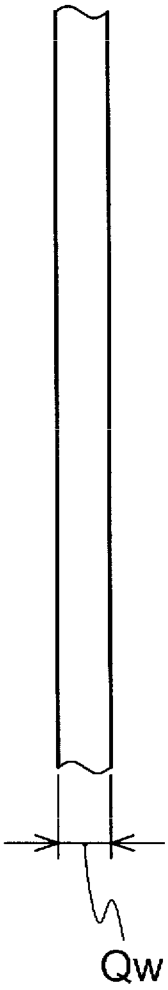


FIG. 4B

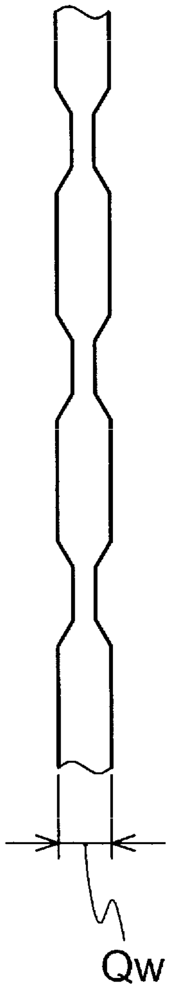


FIG. 4C

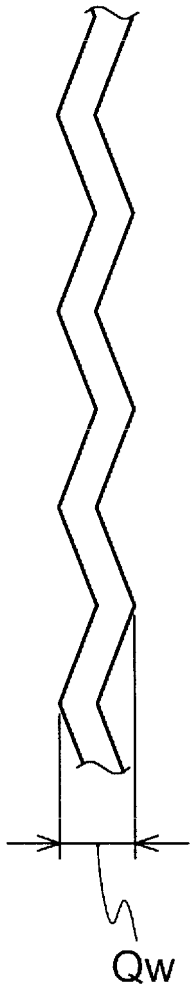

FIG. 5

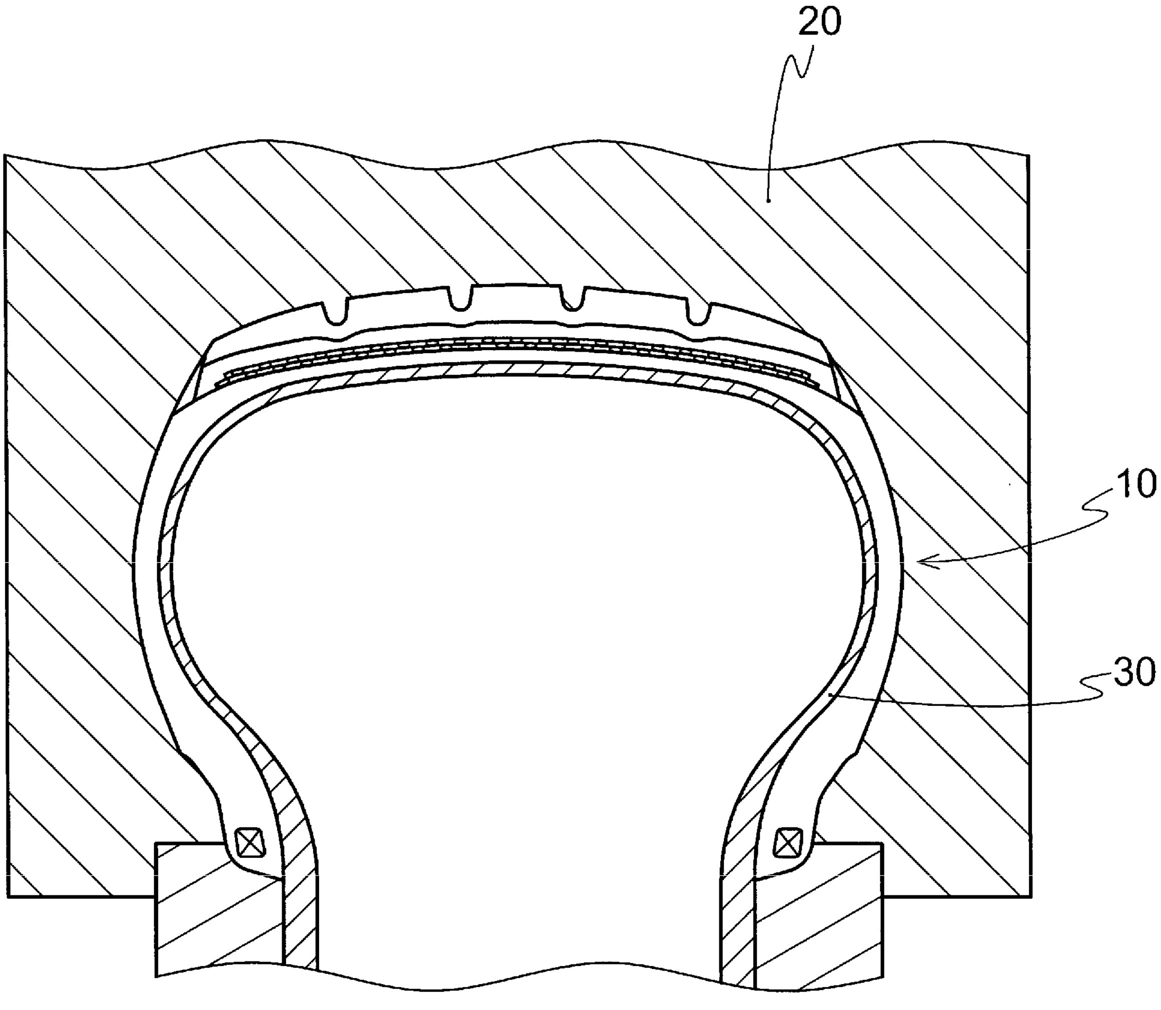

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011086943 A1
- JP 2011116847 A